(19) Europäisches Patentamt
European Patent Office
Office européen des brevets

(11) **EP 3 686 304 B1**

(12) **EUROPEAN PATENT SPECIFICATION**

(45) Date of publication and mention
of the grant of the patent:
**03.12.2025   Bulletin 2025/49**

(21) Application number: **17926116.9**

(22) Date of filing: **19.09.2017**

(51) International Patent Classification (IPC):
*C22C 38/00* (2006.01)     *C21D 8/02* (2006.01)
*C22C 38/02* (2006.01)     *C22C 38/04* (2006.01)
*C22C 38/06* (2006.01)     *C22C 38/08* (2006.01)
*C22C 38/12* (2006.01)     *C22C 38/14* (2006.01)
*C22C 38/16* (2006.01)     *C22C 38/18* (2006.01)
*C22C 38/22* (2006.01)     *C22C 38/24* (2006.01)
*C22C 38/26* (2006.01)     *C22C 38/28* (2006.01)
*C22C 38/40* (2006.01)     *C21D 8/10* (2006.01)
*C21D 9/08* (2006.01)     *C21D 1/19* (2006.01)

(52) Cooperative Patent Classification (CPC):
**C22C 38/001; C21D 8/105; C21D 9/085;
C22C 38/002; C22C 38/005; C22C 38/02;
C22C 38/04; C22C 38/06; C22C 38/08;
C22C 38/12; C22C 38/14; C22C 38/16;
C22C 38/18; C22C 38/22; C22C 38/24;**     (Cont.)

(86) International application number:
**PCT/JP2017/033715**

(87) International publication number:
**WO 2019/058422 (28.03.2019 Gazette 2019/13)**

(54) **STEEL TUBE AND STEEL SHEET**

STAHLROHR UND STAHLBLECH

TUBE EN ACIER ET TÔLE EN ACIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.07.2020   Bulletin 2020/31**

(73) Proprietor: **NIPPON STEEL CORPORATION
Tokyo (JP)**

(72) Inventors:
• **HARA, Takuya**
**Tokyo 100-8071 (JP)**
• **SHINOHARA, Yasuhiro**
**Tokyo 100-8071 (JP)**

(74) Representative: **Vossius & Partner
Patentanwälte Rechtsanwälte mbB
Siebertstrasse 3
81675 München (DE)**

(56) References cited:
EP-A1- 2 832 879     WO-A1-2010/087511
WO-A1-2011/152240     WO-A1-2016/051727
WO-A1-2016/075925     WO-A1-2017/111398
CN-A- 102 719 745     JP-A- 2012 241 274
JP-A- 2015 117 408     JP-A- 2016 079 431
US-A1- 2013 092 280

• BUDIARSA I. NYOMAN: "Indentation Size Effect
(ISE) of Vickers Hardness in Steels: Correlation
with H/E", APPLIED MECHANICS AND
MATERIALS, vol. 391, 3 September 2013
(2013-09-03), CH, pages 23 - 28, XP093129850,
ISSN: 1662-7482, DOI: 10.4028/
www.scientific.net/AMM.391.23

(52) Cooperative Patent Classification (CPC): (Cont.)
**C22C 38/26; C22C 38/28; C22C 38/40;** C21D 1/19;
C21D 8/0205; C21D 8/0263; C21D 2211/002;
C21D 2211/005; C21D 2211/008

## Description

[Technical Field of the Invention]

The present invention relates to a steel pipe and a steel plate that is suitable as a material of the steel pipe.

[Related Art]

Recently, the drilling depth of oil wells and gas wells (hereinafter, also collectively referred to as "oil wells") has tended to increase. Accordingly, high-strengthening is required for steel pipe for an oil-well. In addition, an oil-well steel pipe is exposed to a harsh acidic environment (high-pressure hydrogen sulfide environment) including corrosive gas. Therefore, sulfide stress cracking (hereinafter, also referred to as "SSC") or hydrogen induced cracking (hereinafter, also referred to as "HIC") cause problems. In addition, a steel pipe used for a pipeline that transports oil or gas is also exposed to corrosive gas produced from an oil well. Therefore, sulfide stress cracking resistance (SSC resistance) and hydrogen induced cracking resistance (HIC resistance) are required for the steel pipe (line pipe) used for a pipeline.

Hereinafter, sulfide stress cracking resistance (SSC resistance) and hydrogen induced cracking resistance (HIC resistance) will also be collectively referred to as "sour resistance".

SSC or HIC occurs mainly in the vicinity of an inclusion or a weld. Therefore, in the related art, a seamless steel pipe has been mainly used for uses where high strength and sour resistance are required. In addition, in a high-pressure hydrogen sulfide environment, a stainless steel pipe or a high alloy steel pipe has been used instead of common steel or low alloy steel. However, recently, from the viewpoint of reducing the manufacturing costs, an inexpensive steel pipe that can be used in a high-pressure hydrogen sulfide environment has been desired.

As a method of improving sour resistance in a high-pressure hydrogen sulfide environment, for example, Non-Patent Document 1 proposes microstructure controls for a 125 ksi-grade high-strength steel pipe for an oil well, for example, (a) finely dispersing a non-metallic inclusion to prevent pitting corrosion, (b) reducing a dislocation density by high-temperature tempering using a nano-sized carbide, or (c) improving the form of a grain boundary carbide by spheroidizing $M_3C$ and preventing formation of $M_{23}C_6$.

Non-Patent Document 1 discloses that the SSC resistance of steels developed using these methods is evaluated while changing environment conditions and the developed steels have more satisfactory performance than a steel in the related art.

However, Non-Patent Document 1 has a problem in that the application range is limited regarding a seamless steel pipe. The reasons why the application range is limited are, for example, the seamless steel pipe cannot be used for a large-diameter welded steel pipe used for a trunk line or the like and weldability that is an important characteristic for a steel pipe used for a pipeline is poor.

On the other hand, Patent Document 1 and Non-Patent Document 2 proposes a welded steel pipe having satisfactory sour resistance and a steel plate for the steel pipe. In the steel pipe, the hardnesses of a base metal and a weld are defined to be 220 Hv or lower based on a finding that sour resistance is affected by hardness.

In addition, Patent Document 2 proposes a high strength steel plate for a sour-resistant line pipe, in which a CP value $(=4.46 \times [\%C]+2.37 \times [\%Mn]/6+(1.74 \times [\%Cu]+1.7 \times [\%Ni])/15+(1.18 \times [\%Cr]+1.95 \times [\%Mo]+1.74 \times [\%V])/5+22.36 \times [\%P])$ that is an index indicating the hardness of a center segregation portion is 1.0 or lower by mass%, a steel structure is a bainite structure, a dispersion $\Delta HV$ in the hardness in a through-thickness direction is 30 or lower, and a dispersion $\Delta HV$ in the hardness in a transverse direction is 30 or lower.

In addition, Patent Document 3 proposes a high strength steel plate for a sour-resistant line pipe having satisfactory material uniformity in the steel plate, in which a microstructure is a bainite structure, a dispersion $\Delta HV_{10}$ in the hardness in a through-thickness direction is 25 or lower, a dispersion $\Delta HV_{10}$ in the hardness in a transverse direction is 25 or lower, and a maximum hardness of a steel plate surface layer in terms of $Hv_{10}$ is 220 or lower.

In addition, Patent Document 4 proposes a quenched and tempered steel plate having satisfactory hydrogen induced cracking resistance, in which a microstructure in a range within 1 mm from a steel plate surface in a through-thickness direction includes one kind or two kinds selected from tempered martensite and tempered bainite, an area fraction of a primary phase including one kind or two kinds selected from tempered martensite and tempered bainite in a microstructure in a range within $\pm 1$ mm from a thickness middle portion in the through-thickness direction is 80% or more, a remainder other than the primary phase includes one or more kinds selected from ferrite, pearlite, cementite, and residual austenite, a hardness at a position of 1 mm from the steel plate surface in the through-thickness direction in terms of Vickers hardness is 250 HV or lower, and a difference in hardness between the position of 1 mm from the steel plate surface and the thickness middle portion in terms of Vickers hardness is 60 HV or lower.

In the steel plates of Patent Documents 1 to 4 and Non-Patent Document 2, sour resistance in an environment having a hydrogen sulfide partial pressure of 0.1 MPa (1 bar) or lower is improved. However, a recent oil well environment becomes harsher, and a required level for sour resistance of a welded steel pipe used for a pipeline or the like has further increased. In the related art, sour resistance in an environment having a hydrogen sulfide partial pressure of 0.1 MPa (1 bar) or lower has been required. Recently, a material that can withstand a high-pressure hydrogen sulfide environment of higher than 0.1 MPa has been required.

According to an investigation by the present inventors, in the steel plates of Patent Documents 1 to 4 and the steel plate of Non-Patent Document 2, the microstructure and the hardness are not controlled over the entire range of the surface layer, and sour resistance in the environment having a hydrogen sulfide partial pressure of higher than 0.1 MPa (1 bar) is not sufficient.

EP2832879A1 discloses a steel pipe for line pipe use of the API standard X60 to X80.

[Prior Art Document]

[Patent Document]

[Patent Document 1] Japanese Unexamined Patent Application, First Publication No. 2011-017048
[Patent Document 2] Japanese Unexamined Patent Application, First Publication No. 2012-077331
[Patent Document 3] Japanese Unexamined Patent Application, First Publication No. 2013-139630
[Patent Document 4] Japanese Unexamined Patent Application, First Publication No. 2014-218707

[Non-Patent Document]

[Non-Patent Document 1] Nippon Steel Technical Report No. 397 (2013), p. 17 to 22
[Non-Patent Document 2] JFE Technical Report No. 9 (August, 2005), p. 19 to 24

[Disclosure of the Invention]

[Problems to be Solved by the Invention]

As described above, a recent oil well environment becomes harsher, and thus a required level for sour resistance of a welded steel pipe used for a pipeline for transport has further increased compared to the related art. Therefore, an object of the present invention is to provide: a steel pipe having satisfactory sour resistance that can be used in a harsh high-pressure hydrogen sulfide environment; and a steel plate that is a material of the steel pipe.

More specifically, the object is to provide: a steel pipe having HIC resistance more satisfactory than or equal to steel in the related art, having a yield strength of 350 MPa or higher, and having satisfactory SSC resistance such that cracking does not occur even when a stress that is 90% or higher of the yield strength is applied in an environment including hydrogen sulfide at 30°C or lower where a hydrogen sulfide partial pressure is higher than 0.1 MPa; and a steel plate that is a material of the steel pipe.

[Means for Solving the Problem]

In order to investigate a method for achieving the object, the present inventors observed a fracture surface and a microstructure of a steel plate that cracks in a high-pressure hydrogen sulfide environment (for example, in a $H_2S$ saturated solution including 5% sodium chloride and acetic acid) having a hydrogen sulfide partial pressure of higher than 0.1 MPa. As a result, the following findings were obtained.

(a) In order to improve sour resistance in a high-pressure hydrogen sulfide environment having a hydrogen sulfide partial pressure of higher than 0.1 MPa, it is necessary to control not only HIC resistance of a steel plate but also SSC resistance thereof. Hydrogen induced cracking (HIC) occurs in a center segregation portion present in the vicinity of a steel plate center portion. On the other hand, sulfide stress cracking (SSC) depends on a microstructure and a hardness of a range (surface layer) within 1.0 mm from a surface of a steel pipe that is not substantially considered in the related art.

(b) When a maximum hardness in a microstructure of the surface layer is 250 Hv or lower in a state where the microstructure of the surface layer is made to be a microstructure including higher than 80% of one or more kinds in total selected from granular bainite, acicular ferrite, tempered bainite, and tempered martensite, sour resistance (SSC

4

resistance) of the steel plate is improved.

(c) In order to control the microstructure of the surface layer as described above, it is important to strictly control a cooling pattern in a state where a carbon equivalent Ceq defined by the following Expression (2) is controlled to be 0.20 to 0.50.

$$Ceq=[C]+[Mn]/6+([Cu]+[Ni])/15+([Cr]+[Mo]+[V])/5 \qquad \ldots \qquad (2)$$

[Element]: mass% of the element (when the element is not included, 0%).

(d) In addition, in a steel plate to which a method of manufacturing a hot-rolled steel plate that is assumed to be wound is applied, a cooling rate after stopping accelerated cooling is slower than that during air cooling. In this case, a dispersion in hardness is small, but the microstructure and/or the hardness of the surface layer described above cannot be obtained. Therefore, in order to obtain the microstructure and the hardness of the surface layer described above, it is necessary to manufacture the steel plate through a so-called steel plate process.

The present invention has been made based on the above-described findings. The present invention is defined in the appended claims.

[Effects of the Invention]

According to the aspects of the present invention, it is possible to provide: a steel pipe having satisfactory HIC resistance, having a yield strength of 350 MPa or higher, and having satisfactory SSC resistance such that cracking does not occur even when a stress that is 90% or higher of the yield strength is applied in an environment including hydrogen sulfide at 30°C or lower where a hydrogen sulfide partial pressure is higher than 0.1 MPa; and a steel plate that is a material of the steel pipe. The steel plate is suitable for manufacturing a steel pipe for digging or a steel pipe for transport of petroleum, natural gas, or the like. The steel pipe manufactured using the steel plate is suitable for use in a high-pressure hydrogen sulfide environment.

[Brief Description of the Drawings]

FIG. 1 is a diagram schematically showing one aspect of accelerated cooling after completion of hot rolling.

FIG. 2A is a diagram showing an example of a hardness distribution of a surface layer in a recuperated steel plate, the hardness distribution being obtained when the number of times of recuperating is one.

FIG. 2B is a diagram showing an example of a hardness distribution of a surface layer in a recuperated steel plate, the hardness distribution being obtained when the number of times of recuperating is two.

FIG. 2C is a diagram showing an example of a hardness distribution of a surface layer in a recuperated steel plate, the hardness distribution being obtained when the number of times of recuperating is three.

FIG. 3A is an image showing a microstructure (observed with a scanning electron microscope) positioned 0.5 mm below from the outermost surface of the steel plate, in which an example of granular bainite is shown.

FIG. 3B is a representative image showing a microstructure (observed with a scanning electron microscope) positioned 0.5 mm below from the outermost surface of the steel plate, in which acicular ferrite is shown.

FIG. 4 is a diagram showing a relationship between a maximum hardness, a hydrogen sulfide partial pressure, and whether or not sulfide stress cracking (SSC) occurs.

FIG. 5 is a schematic diagram showing a steel pipe according to an embodiment of the present invention.

[Embodiments of the Invention]

A steel pipe according to one embodiment of the present invention (the steel pipe according to the embodiment) includes:

(i) a base metal that includes a cylindrical steel plate; and
a weld that is provided in a seam portion of the steel plate and extends in a longitudinal direction of the steel plate,
(ii) the steel plate has a predetermined chemical composition and satisfies ESSP defined by the following Expression (1): 1.5 to 3.0 and Ceq defined by the following Expression (2): 0.20 to 0.50,
(iii) a total area fraction of one or more kinds selected from the group consisting of granular bainite, acicular ferrite, tempered bainite, and tempered martensite in a microstructure of a surface layer in a range up to a depth of 1.0 mm from a surface of the base metal is more than 80%,

(iv) $Hv_{max}$ that is a maximum hardness in the surface layer of the base metal is 250 Hv or lower and preferably 240 Hv or lower,

(v) a yield ratio is 85% or higher, and

(vi) it is preferable that a plate thickness of the base metal is 10 to 40 mm and a pipe diameter is 508 mm or more.

$$ESSP=[Ca]\times(1-124\times[O])/(1.25\times[S]) \qquad ... \qquad (1)$$

$$Ceq=[C]+[Mn]/6+([Cu]+[Ni])/15+([Cr]+[Mo]+[V])/5 \qquad ... \qquad (2)$$

[Ca], [O], [S], [C], [Mn], [Cu], [Ni], [Cr], [Mo], and [V] in Expressions (1) and (2) represent contents of Ca, O, S, C, Mn, Cu, Ni, Cr, Mo, and V, respectively, by mass%.

In addition, a steel plate according to one embodiment of the present invention (the steel plate according to the embodiment) is used as the base metal of the steel pipe according to the embodiment. That is, the steel pipe according to the embodiment can be obtained by processing the steel plate according to the embodiment into a pipe shape and welding a seam portion of the steel plate.

Hereinafter, the steel pipe according to the embodiment, the steel plate according to the embodiment, and preferable methods of manufacturing the same will be described.

The base metal of the steel pipe according to the embodiment (that is, the steel plate according to the embodiment) has the following chemical composition. In the embodiment, unless specified otherwise, "%" relating to the chemical composition represents "mass%".

C: 0.030% to 0.080%

C is an element for improving the strength of the steel. When the C content is less than 0.030%, the effect of improving the strength cannot be sufficiently obtained. Therefore, the C content is 0.030% or more. The C content is more preferably 0.035% or more. On the other hand, when the C content is more than 0.080%, the hardness of a low-temperature transformation phase such as martensite, bainite, or granular bainite is likely to increase, a large amount of carbide is formed, and HIC is likely to occur. Therefore, the C content is 0.080% or less. In order to secure more satisfactory HIC resistance or to further suppress deterioration in weldability and toughness, the C content is preferably 0.070% or less, more preferably 0.065% or less, and still more preferably 0.060% or less.

Mn: 0.80% to 1.60%

Mn is an element for improving the strength and toughness of the steel. When the Mn content is less than 0.80%, the effects cannot be sufficiently obtained. Therefore, the Mn content is 0.80% or more. The Mn content is preferably 0.90% or more and more preferably 1.00% or more. On the other hand, when the Mn content is more than 1.60%, sour resistance deteriorates. Therefore, the Mn content is set to be 1.60% or less. The Mn content is preferably 1.50% or less.

Nb: 0.006% to 0.100%

Nb is an element that forms a carbide or a nitride, suppresses recrystallization during hot rolling, and contributes to improvement the strength and low-temperature toughness of the steel. When the Nb content is less than 0.006%, the effects cannot be sufficiently obtained. Therefore, the Nb content is 0.006% or more. The Nb content is preferably 0.008% or more and more preferably 0.010% or more. On the other hand, when the Nb content is more than 0.100%, a carbonitride of Nb accumulates on a center segregation portion, and HIC resistance deteriorates. Therefore, the Nb content is 0.100% or less. The Nb content is preferably 0.080% or less and more preferably 0.060% or less.

Ti: 0.001% to 0.030%

Ti is an element that forms a carbonitride and contributes to the refinement of crystal grains. When the Ti content is less than 0.001%, the effect cannot be sufficiently obtained. Therefore, the Ti content is 0.001 % or more. The Ti content is preferably 0.008% or more and more preferably 0.010% or more. On the other hand, when the Ti content is more than 0.030%, an excess amount of a coarse carbonitride is formed, and HIC resistance and toughness deteriorate. Therefore, the Ti content is 0.030% or less. The Ti content is preferably 0.025% or less and more preferably 0.020% or less.

Ca: 0.0005% to 0.0050%

Ca is an element that forms CaS in the steel to suppress formation of MnS stretched in a rolling direction and thus contributes improvement of HIC resistance. When the Ca content is less than 0.0005%, the effect cannot be sufficiently obtained. Therefore, the Ca content is 0.0005% or more. The Ca content is preferably 0.0010% or more and more preferably 0.0015% or more. On the other hand, when the Ca content is more than 0.0050%, an oxide accumulates, and HIC resistance deteriorates. Therefore, the Ca content is 0.0050% or less. The Ca content is preferably 0.0045% or less and more preferably 0.0040% or less.

N: 0.0010% to 0.0080%

N is an element that is bonded to Ti or Nb to form a nitride and contributes to refinement of an austenite grain size during heating. When the N content is less than 0.0010%, the effect cannot be sufficiently obtained. Therefore, the N content is 0.0010% or more. The N content is preferably 0.0020% or more. On the other hand, when the N content is more than 0.0080%, a nitride of Ti or Nb is coarsened and accumulates, and HIC resistance deteriorates. Therefore, the N content is controlled to be 0.0080% or less. The N content is preferably 0.0070% or less and more preferably 0.0060% or less.
In addition to the above-described elements, the chemical composition of the base metal (the steel plate according to the embodiment) of the steel pipe according to the embodiment may include one or more selected from the group consisting of Cr, Mo, Ni, Cu, V, Mg, and REM in ranges described below instead of a part of Fe in order to adjust Ceq (described below) that is an index for hardenability or to control the form of an inclusion. These elements are optional elements and are not necessarily included. That is, the lower limits of the contents of the elements are 0%.

Cr: 0% to 1.00%

Ni: 0% to 1.00%

Cu: 0% to 1.00%

Cr, Ni, and Cu are elements that improve the hardenability of the steel. In order to obtain the effect, it is preferable that each or a combination of the Cr content, the Ni content, and the Cu content is 0.10% or more. On the other hand, when each of the Cr content, the Ni content, and the Cu content is more than 1.00%, hardness increases, and sour resistance deteriorates. Therefore, even when Cr, Ni, or Cu is included, each of the Cr content, the Ni content, and the Cu content is 1.00% or less. It is preferable that Cr: 0.70% or less, Ni: 0.80% or less, and Cu: 0.70% or less.

Mo: 0% to 0.50%

Mo is an element that improves the hardenability of the steel. In order to obtain this effect, it is preferable that the Mo content is 0.03% or more. On the other hand, when the Mo content is more than 0.50%, hardness increases, and sour resistance deteriorates. Therefore, even when Mo is included, the Mo content is 0.50% or less. The Mo content is preferably 0.35% or less.

V: 0% to 0.10%

V is an element that improves the hardenability of the steel and suppresses the softening of a heat-affected zone. In order to obtain this effect, it is preferable that the V content is 0.005% or more. On the other hand, when the V content is more than 0.10%, hardness increases, and sour resistance deteriorates. Therefore, even when V is included, the V content is preferably 0.10% or less. The V content is preferably 0.06% or less.

Mg: 0% to 0.0100%

REM: 0% to 0.0100%

Mg or REM is an element that controls the form of a sulfide and contributes to improvement of HIC resistance. In order to obtain the effect, it is preferable that each or a combination of the Mg content and the REM content is 0.0010% or more. On the other hand, when the Mg content or the REM content is more than 0.0100%, a sulfide is coarsened, and the effect of improving HIC resistance cannot be obtained. Therefore, even when Mg or REM is included, each of the Mg content and the REM content is limited to 0.0100% or less. Each of the Mg content and the REM content is preferably 0.0050% or less.

In the embodiment, REM refers to rare earth elements and is a collective term for 16 elements including scandium Sc, and lanthanoids. The REM content refers to the total amount of the 16 elements.

The base metal (the steel plate according to the embodiment) of the steel pipe according to the embodiment includes the above-described essential elements and the remainder being of Fe and impurities. Alternatively, the base metal includes the above-described essential elements, one or more of the above-described optional elements, and the remainder being of Fe and impurities. Here, the impurities refer to elements which are incorporated from raw materials such as ore or scrap or incorporated in various environments of the production process when the steel is industrially produced, and the impurities are allowed to be included in the steel in a range where there are no adverse effects on the characteristics of the steel.

Among the impurities, it is preferable that O, Si, Al, P, S, Sb, Sn, Co, As, Pb, Bi, H, W, Zr, Ta, B, Nd, Y, Hf, and Re are controlled to be in ranges described below. In particular, O, Si, Al, P, and S are elements that are typically incorporated and are necessarily limited to the following ranges.

O: 0.0050% or less

O is an element that unavoidably remains. When the O content is more than 0.0050%, an oxide is formed, and HIC resistance deteriorates. Therefore, the O content is controlled to be 0.0050% or less. From the viewpoint of securing toughness, the O content is preferably 0.0040% or less and more preferably 0.0030% or less. The less the O content, the better, and the O content may be 0%. However, when the O content is reduced to be less than 0.0001%, the manufacturing costs significantly increase. Therefore, the O content may be 0.0001% or more. From the viewpoint of manufacturing costs, the O content is preferably 0.0005% or more.

Si: 0.50% or less

On the other hand, when the Si content is more than 0.50%, toughness deteriorates. Therefore, the Si content is 0.50% or less. The Si content is preferably 0.35% or less and more preferably 0.30% or less. The Si content may be 0%.

On the other hand, Si is incorporated from steel raw materials and/or in the steelmaking process. Therefore, the lower limit of the Si content in the actual steel is substantially 0.01%.

In addition, Si may be added for deoxidation. In this case, the lower limit of the Si content may be 0.10%.

Al: 0.060% or less

When the Al content is more than 0.060%, a cluster on which an Al oxide accumulates is formed, and HIC resistance deteriorates. Therefore, the Al content is 0.060% or less. The Al content is preferably 0.050% or less, more preferably 0.035% or less, and still more preferably 0.030% or less. It is preferable the lesser Al content, and the Al content may be 0%.

On the other hand, Al is incorporated from steel raw materials and/or in the steelmaking process. Therefore, the lower limit of the Al content in the actual steel is substantially 0.001 %.

In addition, Al may be added for deoxidation. In this case, the lower limit of the Al content may be 0.010%.

P: 0.020% or less

P is an element that is unavoidably incorporated and is included as an impurity. When the P content is more than 0.020%, HIC resistance and toughness deteriorate. Therefore, the P content is 0.020% or less. The P content is preferably 0.015% or less and more preferably 0.010% or less. The less the P content, the better, and the lower limit thereof may be 0%. However, when the P content is reduced to less than 0.001%, the manufacturing costs significantly increase. Therefore, the lower limit of the P content in the actual steel is substantially 0.001%.

S: 0.003% or less

S is an element that is unavoidably incorporated and is included as an impurity. In addition, S is an element that forms MnS stretched in a rolling direction during hot rolling and deteriorates HIC resistance. When the S content is more than 0.003%, HIC resistance significantly deteriorates. Therefore, the S content is 0.003% or less. The S content is preferably 0.002% or less and more preferably 0.001% or less. The less the S content, the better, and the lower limit thereof may be 0%. However, when the S content is reduced to less than 0.0001%, the manufacturing costs significantly increase. Therefore, the lower limit of the P content in the actual steel is substantially 0.0001%.

Sb: 0.10% or less

Sn: 0.10% or less

Co: 0.10% or less

As: 0.10% or less

Pb: 0.005% or less

Bi: 0.005% or less

H: 0.0005% or less

B: 0.0003% or less

Sb, Sn, Co, As, Pb, Bi, H, and B are unavoidably incorporated from steel raw materials, but when the contents thereof are in the above-described ranges, the characteristics of the steel pipe according to the embodiment do not deteriorate. Therefore, it is preferable that these elements are limited to the above-described ranges.

W, Zr, Ta, Nd, Y, Hf, and Re: 0.10% or less in total

These elements are unavoidably incorporated from steel raw materials, but when the contents thereof are in the above-described ranges, the characteristics of the steel pipe according to the embodiment do not deteriorate. Therefore, the total amount of the elements is limited to 0.10% or less.

In the base metal of the steel pipe according to the embodiment, it is necessary that ESSP and Ceq calculated from the contents of the components are controlled to be in predetermined ranges as described below in a state where the amount of each of the elements is controlled to be in the above-described range.

ESSP: 1.5 to 3.0

In the steel pipe according to the embodiment, in order to secure HIC resistance more satisfactory than or equal to steel in the related art, it is necessary that ESSP defined by the following Expression (1) is 1.5 to 3.0.

$$ESSP=[Ca]\times(1-124\times[O])/(1.25\times[S]) \qquad ... \qquad (1)$$

[Ca], [O], [S]: contents of Ca, O, and S by mass%

In order to secure HIC resistance, it is effective to suppress formation of MnS stretched in a rolling direction. In addition, in order to suppress formation of MnS stretched in a rolling direction, a method of reducing the S content and adding Ca to form CaS and to fix S is effective. On the other hand, Ca has a stronger oxygen affinity than S. Therefore, in order to form a necessary amount of CaS, it is necessary to reduce the O content.

ESSP is an index relating to the residual Ca (effective Ca) excluding Ca bonded to oxygen. Specifically, ESSP is an index indicating whether an effective Ca content depending on the S content, which bonds to S with an atomic weight ratio as an assumption, is present.

When ESSP is lower than 1.5, the Ca content is insufficient relative to the O content and the S content and MnS is formed. MnS stretched during rolling causes deterioration in HIC resistance. Therefore, ESSP is 1.5 or higher. ESSP is preferably 1.6 or higher and more preferably 1.7 or higher.

On the other hand, when the Ca content is excessive, a large amount of a clustered inclusion is formed, and there is a concern in that the control of the form of MnS is inhibited. When the O content and the S content are reduced, the formation of a clustered inclusion is suppressed. However, when ESSP is higher than 3.0, the manufacturing costs for reducing the O content and the S content significantly increase. Therefore, ESSP is 3.0 or lower. ESSP is preferably 2.8 or lower and more preferably 2.6 or lower.

When ESSP is 1.5 t o 3.0, the amount of effective Ca is more than or equal to a minimum necessary amount for controlling the form of MnS and is adjusted to be less than or equal to a critical amount where a clustered inclusion is not formed. Therefore, satisfactory HIC resistance can be obtained.

Ceq: 0.20 to 0.50

In the base metal of the steel pipe according to the embodiment, it is necessary to appropriately control the hardenability of the steel in order to obtain a microstructure in which a total area fraction of one or more kinds selected from the group consisting of granular bainite, acicular ferrite, tempered bainite, and tempered martensite in a range of 1.0 mm (surface layer) from the surface is 80% or more. Specifically, it is necessary that Ceq (carbon equivalent) defined by the following Expression (2) is 0.20 to 0.50.

$$Ceq=[C]+[Mn]/6+([Cu]+[Ni])/15+([Cr]+[Mo]+[V])/5 \qquad ... \qquad (2)$$

[C], [Mn], [Cu], [Ni], [Cr], [Mo], [V]: contents of C, Mn, Cu, Ni, Cr, Mo, and V by mass%; when the element is not included, each of [C], [Mn], [Cu], [Ni], [Cr], and [Mo] is 0

When Ceq is less than 0.20, ferrite or pearlite is formed in the microstructure, and the total area fraction of one or more kinds selected from the group consisting of granular bainite, acicular ferrite, tempered bainite, and tempered martensite in the microstructure becomes 80% or less. In this case, the strength decreases, and sour resistance deteriorates. Therefore, Ceq is 0.20 or higher. Ceq is preferably 0.25 or higher.

On the other hand, when Ceq is higher than 0.50, the surface hardness of the base metal and the weld excessively increases, and sour resistance deteriorates. Therefore, Ceq is 0.50 or lower. Ceq is preferably 0.45 or lower.

Next, the microstructure of the base metal (the steel plate according to the embodiment) of the steel pipe according to the embodiment will be described.

One or more Kinds selected from group consisting of Granular Bainite, Acicular Ferrite, Tempered Bainite, And Tempered Martensite in a range of 1.0 mm (Surface Layer) from Surface: a total structure fraction (area fraction) of more than 80%

In the steel pipe according to the embodiment, in order to suppress the maximum hardness of the surface layer to be 250 Hv or lower and to secure a required strength and satisfactory sour resistance, it is necessary that the total area fraction of one or more kinds selected from the group consisting of granular bainite, acicular ferrite, tempered bainite, and tempered martensite in the surface layer is more than 80%. When the total area fraction of the microstructures is 80% or less, a sufficient strength and sour resistance cannot be obtained.

The total area fraction of one or more kinds selected from the group consisting of granular bainite, acicular ferrite, tempered bainite, and tempered martensite is preferably 85% or more. The total area fraction of one or more kinds selected from the group consisting of granular bainite, acicular ferrite, tempered bainite, and tempered martensite is more preferably 90% or more.

In addition, the total area fraction of granular bainite and acicular ferrite is more than 80%.

The microstructure may include one or more selected from polygonal ferrite and pseudo pearlite as a microstructure (remainder) other than granular bainite, acicular ferrite, tempered bainite, and tempered martensite. When the area fraction of these microstructures is 20% or more, it is difficult to secure a required strength, and sour resistance deteriorates. Therefore, the area fraction of polygonal ferrite and/or pseudo pearlite is less than 20%. The area fraction of polygonal ferrite and/or pseudo pearlite is preferably 15% or less and more preferably 10% or less.

The area fraction of each of the microstructures can be obtained by observing the microstructure with a scanning electron microscope, for example, at a magnification of 1000-fold. The microstructure of the surface layer can be obtained by measuring area fractions at positions of 0.1 mm, 0.2 mm, and 0.5 mm from the surface of the steel plate and obtaining the average of the area fractions at the respective positions.

In the embodiment, polygonal ferrite is a microstructure that is observed as a massive microstructure not including a coarse precipitate such as coarse cementite or MA in grains.

Acicular ferrite is a microstructure in which a prior austenite grain boundary is not clear and acicular ferrite (a carbide and an austenite-martensite constituent are not present) is formed in a random crystal orientation in grains.

Granular bainite is a microstructure that is formed at an intermediate transformation temperature between acicular ferrite and bainite and has intermediate structural characteristics between acicular ferrite and bainite. Specifically, granular bainite is a microstructure in which a prior austenite grain boundary partially appears, a coarse lath structure is present in grains, and a portion where a fine carbide and an austenite-martensite constituent are scattered in and between laths and a portion of acicular or amorphous ferrite where a prior austenite grain boundary is not clear are mixed.

Bainite is a microstructure in which a prior austenite grain boundary is clear, a fine lath structure is developed in grains, and a fine carbide and an austenite-martensite constituent are scattered in and between laths. In the embodiment bainite is not finally present, and tempered bainite that is tempered during recuperating is present.

Although tempered bainite and tempered martensite cannot be distinguished from each other by observation with a scanning electron microscope, tempered bainite and tempered martensite have a lath shape, and are microstructures in which a carbide is dispersed in laths and a lath boundary.

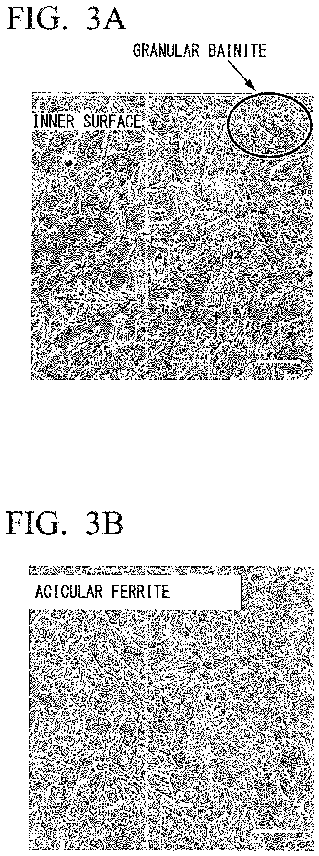

FIGS. 3A and 3B show microstructures (observed with a scanning electron microscope) positioned 0.5 mm below the surface of the steel plate that is the base metal of the steel pipe according to the embodiment. A microstructure in a portion surrounded by a circle in FIG. 3A is granular bainite. In addition, FIG. 3B shows a microstructure mainly including acicular ferrite.

In the steel pipe according to the embodiment, a microstructure of a portion other than the surface layer is not defined. However, when the microstructure of the surface layer is controlled as described above using a manufacturing method described below, a microstructure of a portion other than the surface layer, for example, a 1/2t portion (thickness middle portion) is a microstructure mainly including acicular ferrite and granular bainite.

Maximum Hardness $Hv_{max}$ of Range (Surface Layer) up to Depth of 1.0 mm from Surface: 250 Hv or lower

SSC occurs due to micro defects or micro cracks of the steel plate surface. Therefore, in the steel plate and the steel pipe manufactured from the steel plate, the microstructure and the hardness of thee surface layer as factors for causing micro defects or micro cracks to occur are important. In particular, it is important to control the maximum hardness not only at the position of a depth of 1.0 mm from the surface but also in the entire range up to a depth of 1.0 mm from the surface.

In the steel pipe according to the embodiment, in order to secure HIC resistance and satisfactory SSC resistance, the maximum hardness of the surface layer is adjusted to be 250 Hv or lower in a state where the microstructure of the surface layer is controlled as described above. The maximum hardness of the surface layer is preferably 248 Hv or lower and more preferably 240 Hv or lower.

The maximum hardness of the surface layer in a range up to a depth of 1.0 mm from the steel plate surface is measured as follows.

First, 300 mm×300 mm steel plates are cut out by gas cutting from positions of 1/4, 1/2, and 3/4 (positions of 3 o'clock, 6 o'clock, and 9 o'clock when the weld of the steel pipe is 0 o'clock) from a width-direction end portion (corresponding to the seam portion in the case of the steel pipe) of the steel plate in the width direction of the steel plate. Block test pieces having a length of 20 mm and a width of 20 mm are collected by mechanical cutting from the centers of the cut steel plates and are polished by mechanical polishing. With respect to each of block test piece, the hardness is measured using a Vickers hardness meter (load: 100 g) at 100 points in total that are obtained by setting a point of 0.1 mm from the surface as a starting point, setting 10 points from the starting point in a through-thickness direction at an interval of 0.1 mm, and setting 10 points at the same depth at an interval of 1.0 mm in a width direction. That is, the hardness is measured at 300 points in total in the three block test pieces.

Unless two or more measurement points having a hardness of higher than 250 Hv continuously appear in the through-thickness direction as a result of the above-described measurement, it is determined that the maximum hardness of the surface layer is 250 Hv or lower.

In the base metal of the steel pipe according to the embodiment, when two or more measurement points having a hardness of higher than 250 Hv are continuously present in the through-thickness direction, SSC resistance deteriorates, which is not allowable. Accordingly, in the embodiment, even when one measurement point having a hardness of higher than 250 Hv is present, unless two or more measurement points do not continuously appear in the through-thickness direction, this point as an abnormal point is not adopted, and the second highest value is obtained as the maximum hardness. On the other hand, when two or more measurement points having a hardness of higher than 250 Hv are continuously present in the through-thickness direction, the values thereof are adopted, and the highest value is obtained as the maximum hardness.

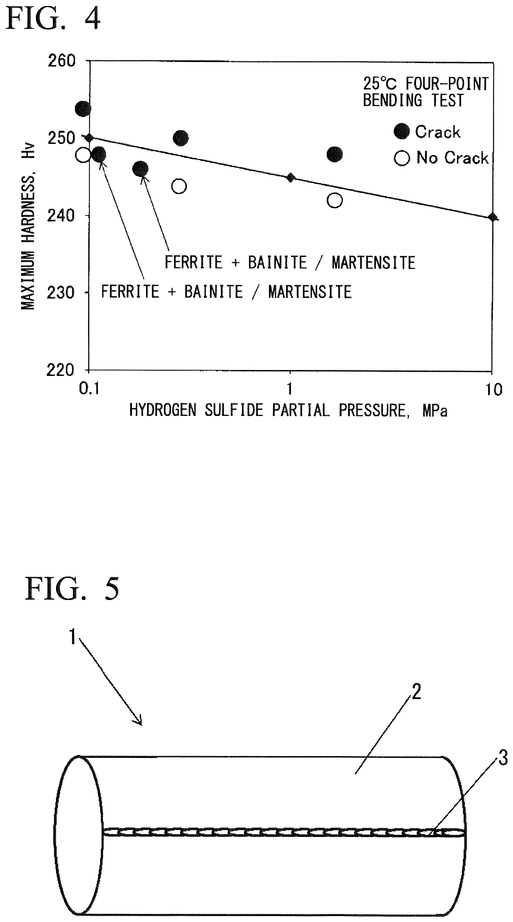

Further, the present inventors conducted an investigation on SSC resistance in a harsher environment. As a result, when a microstructure mainly including granular bainite, acicular ferrite, tempered bainite, and/or tempered martensite is assumed, it can be seen that whether or not sulfide stress cracking (SSC) occurs in an environment where the pH satisfies the following Expression (4) can be determined based on a maximum hardness and a hydrogen sulfide partial pressure as shown in FIG. 4.

$$pH \leq -0.8 \times PH_2S + 5.4 \qquad \ldots \qquad (4)$$

$PH_2S$: hydrogen sulfide partial pressure (MPa)

Specifically, it can be seen that, when a relationship between the maximum hardness of the surface layer up to a depth of 1.0 mm from the surface of the steel plate and the hydrogen sulfide partial pressure satisfies the following Expression (3) in a microstructure mainly including granular bainite, acicular ferrite, tempered bainite, and/or tempered martensite, SSC resistance is improved and SSC does not occur even in a harsh environment satisfying Expression (4).

$$Hv_{max} \leq -5 \times \log(PH_2S) + 245 \ldots \qquad (3)$$

PH$_2$S: hydrogen sulfide partial pressure (MPa)

log: common logarithm

When the maximum hardness Hv$_{max}$ of the surface layer exceeds the right side (critical hardness) of Expression (3), SSC resistance and HIC resistance deteriorate.

As shown in FIG. 4, it is preferable that the maximum hardness of the surface layer is 240 Hv or lower because cracking caused by SSC does not occur even when the hydrogen sulfide partial pressure is 10 MPa.

On the other hand, in an environment where pH and PH$_2$S do not satisfy Expression (4), the maximum hardness of the surface layer may be 250 Hv or lower.

In the steel pipe according to the embodiment, it is not necessary to define the maximum hardness of a 1/2t portion (t: thickness) that is a 1/2 thickness position from the surface. However, it is preferable that the maximum hardness obtained by measuring the hardness in the vicinity of the 1/2t portion at 10 or more points at a pitch of 1.0 mm in a longitudinal direction is 250 Hv or lower because HIC resistance can be further improved.

Even when a stress that is 90% or higher of the yield strength is applied to the base metal (the steel plate according to the embodiment) of the steel pipe according to the embodiment in a H$_2$S saturated solution environment including 5% sodium chloride and acetic acid at 30°C or lower, sulfide stress cracking does not occur. That is, a stress at which breaking occurs in the above-described solution environment is a yield strength of 90% or higher.

Next, mechanical properties of the steel pipe according to the embodiment will be described.

Yield Strength: 350 MPa or higher

The yield strength of the base metal of the steel pipe according to the embodiment is 350 MPa or higher as a target value in order to secure a required strength for the steel pipe according to the embodiment. The yield strength is preferably 400 MPa or higher. The upper limit of the yield strength is not particularly limited, and the upper limit thereof is substantially 630 MPa defined by X70 of API5L from the viewpoints of sour resistance and workability. From the viewpoints of sour resistance and workability, the upper limit of the yield strength is preferably 600 MPa or lower.

Yield Ratio: 85% or higher

The yield ratio of the steel pipe according to the embodiment is 85% or higher. When the yield ratio is excessively low, the tensile strength relative to the required yield strength excessively increases. Therefore, the yield ratio is 85% or higher.

The yield strength and the yield ratio can be obtained by collecting an API full thickness tensile test piece in a direction (C direction) perpendicular to a longitudinal direction of the steel pipe, making the test piece flat, and performing a tensile test.

Plate Thickness: 10 to 40 mm

Pipe Diameter: 508 nm (20 inch) or more

In a steel pipe for digging or a pipe for transport of petroleum, natural gas, or the like, it is preferable that the plate thickness is 10 to 40 mm and the pipe diameter is 508 mm or more. The pipe diameter is preferably 56 inch (1422.4 mm) or less in consideration of facility restrictions of a steel plate mill, an UO mill, or the like.

The steel pipe according to the embodiment can be obtained by processing the steel plate according to the embodiment into a pipe shape, making opposite end portions of the cylindrical steel plate abut against each other, and welding the end portions. Therefore, as shown in FIG. 5, the weld that extends in the longitudinal direction of the steel plate is provided in the seam portion of the steel plate. Typically, the weld is continuously provided in a range from one end portion of the steel plate in the longitudinal direction to another end portion thereof.

In general, during steel pipe welding, the weld is provided such that the thickness is more than that of the base metal. In addition, the weld metal has a higher alloy content than the base metal and also has high corrosion resistance. Therefore, the weld does not substantially cause SSC to occur. Accordingly, the weld of the steel pipe according to the embodiment is not particularly limited as long as it is obtained by SAW welding or the like under typical conditions.

Next, preferable methods of manufacturing the steel pipe according to the embodiment and the steel plate according to the embodiment that is a material of the steel pipe.

As long as the steel pipe according to the embodiment has the above-described configuration, the effects thereof can be obtained irrespective of the manufacturing method thereof. For example, the following manufacturing method is preferable because the steel pipe according to the embodiment can be stably obtained.

The steel plate according to the embodiment can be obtained using a manufacturing method including:

(I) heating a slab having a predetermined chemical composition at 1000°C to 1250°C, hot rolling and finishing hot rolling at the Ar3 point or higher (hot-rolling process);

(II) performing a multiple steps of accelerated cooling (first cooling process) on the steel plate after the hot-rolling process, the multiple steps including three or more times in total of water cooling in a range from the Ar3 point to a water cooling stop temperature of 500°C or lower such that a maximum attainment temperature during recuperating after stopping water cooling exceeds 500°C and water cooling in a range from the maximum attainment temperature during recuperating to the water cooling stop temperature of 500°C or lower such that a maximum attainment temperature during recuperating after stopping water cooling exceeds 500°C; and

(III) performing cooling to up to 500°C or lower at an average cooling rate of 200 °C/hr or faster after the first cooling process (second cooling process).

The steel pipe according to the embodiment can be obtained using a method further including:

(IV) forming the steel plate having undergone the second cooling process into a cylindrical shape (forming process); and

(V) making opposite end portions of the cylindrical steel plate abut against each other and welding the end portions (welding process).

Preferable conditions in each of the processes will be described.

(Hot-Rolling Process)

A slab that is manufactured by casting molten steel having the same chemical composition as that of the base metal of the steel pipe according to the embodiment is heated to 1000°C to 1250°C for hot rolling the stab. The casting of the molten steel and the manufacturing of the slab before hot rolling may be performed using an ordinary method.

When the heating temperature is lower than 1000°C during the rolling of the slab, the load on a rolling mill increases without a decrease in deformation resistance. Therefore, the heating temperature is 1000°C or higher. The heating temperature is preferably 1100°C or higher. On the other hand, when the heating temperature is higher than 1250°C, crystal grains of the slab are coarsened, and strength and toughness deteriorate. Therefore, the heating temperature is 1250°C or lower.

The heated slab is hot-rolled in a temperature range of the Ar3 point or lower to obtain a steel plate, and finishes the hot rolling at the Ar3 point or higher. When the hot rolling finishing temperature is lower than the Ar3 point, worked ferrite is formed in the microstructure of the steel plate, and the strength decreases. Therefore, the hot rolling finishing temperature is the Ar3 point or higher.

(First Cooling Process)

After finishing hot rolling at the Ar3 point or higher, accelerated cooling is started on the steel plate at a temperature of the Ar3 point or higher. Regarding cooling, first, water cooling is performed in a surface temperature range from the Ar3 point to a water cooling stop temperature of 500°C or lower such that a maximum attainment temperature during recuperating after stopping water cooling exceeds 500°C, and subsequently water cooling is performed in a surface temperature range from the maximum attainment temperature during recuperating to the water cooling stop temperature of 500°C or lower such that a maximum attainment temperature during recuperating after stopping water cooling exceeds 500°C. In the first cooling process, multiple steps of accelerated cooling is performed, in which the above-described water cooling where the maximum attainment temperature during recuperating after stopping water cooling exceeds 500°C is performed three times or more.

In order to allow the maximum attainment temperature during recuperating to exceed 500°C, it is important to increase a temperature difference between the surface and the inside. The temperature difference between the surface and the inside can be adjusted by changing the sprayed water density, the pressure of collision, and the like during water cooling.

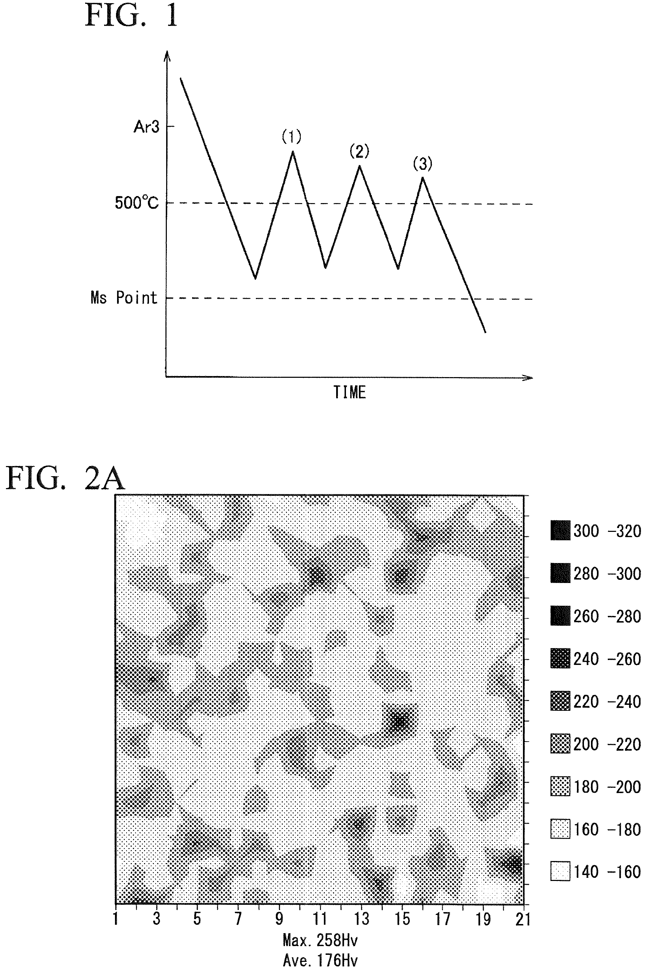

FIG. 1 is a diagram schematically showing one aspect of the multiple steps of accelerated cooling when water cooling where the maximum attainment temperature during recuperating after finishing hot rolling and stopping water cooling exceeds 500°C is performed three times.

When the maximum attainment temperature during recuperating is 500°C or lower, the hardness of the steel plate, in particular, the maximum hardness of the surface layer in a range up to a depth of 1.0 mm from the surface cannot be adjusted to be 250 Hv or lower. In addition, when the number of times of recuperating at higher than 500°C is less than three, the maximum hardness of the surface layer cannot be adjusted to be 250 Hv or lower. Therefore, accelerated cooling is performed such that the number of times of recuperating in which the maximum attainment temperature exceeds 500°C is three or more.

It is preferable that the cooling stop temperature in each water cooling step of the multiple steps of cooling exceeds the Ms point in order not to form martensite that is a hard phase.

In addition, when the water cooling stop temperature before recuperating exceeds 500°C, a predetermined microstructure cannot be obtained. Therefore, the water cooling stop temperature is 500°C or lower.

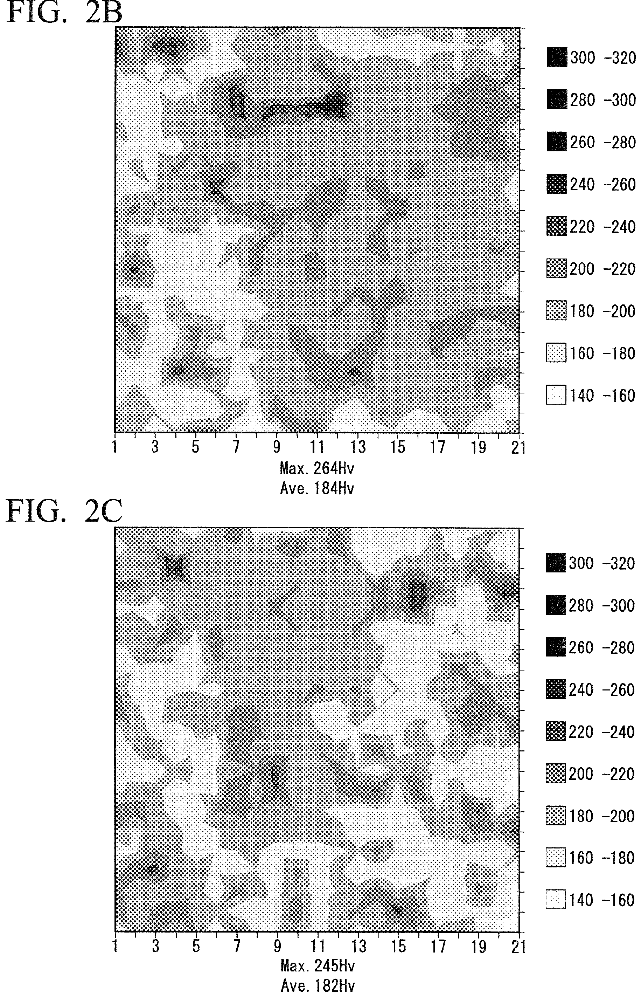

FIGS. 2A to 2C show examples of a hardness distribution of the surface layer of the steel plate after recuperating. FIG. 2A shows a hardness distribution when the number of times of recuperating satisfying the above-described condition is one. FIG. 2B shows a hardness distribution when the number of times of recuperating is two. FIG. 2C shows a hardness distribution when the number of times of recuperating is three. In the drawings, Max. represents the maximum hardness $Hv_{max}$ of the surface layer in a range up to a depth of 1.0 mm from the surface of the steel plate, and Ave. represents the average hardness of the surface layer in a range up to a depth of 1.0 mm from the surface of the steel plate.

As shown in FIG. 2C, by performing recuperating three times, the maximum hardness $Hv_{max}$ of the surface layer in a range up to a depth of 1.0 mm from the surface of the steel plate decreases to be 250 Hv or lower. The number of times of recuperating is the number of times until the maximum hardness Hvmax of the surface layer reaches 250 Hv or lower. Therefore, it is not necessary to define the upper limit of the number of times of recuperating.

By setting the number of times of recuperating to be more than three, the maximum hardness can be further reduced and, for example, can be stably reduced to be 240 Hv or lower.

(Second Cooling Process)

After the first cooling process (completion of three or more times of water cooling and recuperating), cooling is performed up to 500°C or lower at an average cooling rate of 200 °C/hr or faster (second cooling process).

When the average cooling rate up to 500°C or lower is slower than 200 °C/hr, a predetermined microstructure cannot be obtained.

(Forming Process)

(Welding Process)

By forming the steel plate according to the embodiment into a cylindrical shape, making opposite end portions of the steel plate formed in a cylindrical shape abut against each other, and welding the opposite end portions, the steel pipe according to the embodiment is formed.

The formation of the steel plate according to the embodiment into the steel pipe is not limited to a specific forming method. For example, warm working can also be used, but cold working is preferable from the viewpoint of dimensional accuracy.

Welding is not limited to a specific welding method, but submerged are welding (SAW) is preferable. Regarding the weld of the steel pipe according to the embodiment, when the maximum hardness is in the above-described range, welding conditions and the like are not limited. However, it is preferable that the steel plate according to the embodiment is used as a material because the maximum hardness is 250 Hv or lower by performing welding by SAW welding or the like using three electrodes or four electrodes under a condition where the heat input is in a range of 2.0 kJ/mm to 10 kJ/mm depending on the plate thickness.

In the method of manufacturing the steel pipe according to the embodiment, a seam heat treatment of heating the weld to the Ac1 point or lower to temper may be performed such that a microstructure (polygonal ferrite or pseudo pearlite having an area fraction of more than 20%) that is adverse for sour resistance is not formed in the weld.

A heat treatment is not performed on the base metal of the steel pipe according to the embodiment. Therefore, the microstructure of the base metal is the same as the microstructure of the steel plate according to the embodiment. In the steel pipe according to the embodiment, both the base metal and the weld have HIC resistance and SSC resistance that are more satisfactory than or equal to that of steel in the related art.

[Examples]

Next, examples of the present invention will be described. However, conditions of the examples are merely exemplary examples to confirm the operability and the effects of the present invention, and the present invention is not limited to these condition examples. The present invention can adopt various conditions within a range not departing from the scope of the present invention as long as the object of the present invention can be achieved under the conditions.

(Example 1)

Molten steel having a component composition shown in Tables 1-1 and 1-2 was continuously cast to manufacture a steel slab having a thickness of 240 mm. Using this slab, a steel plate shown in Tables 3-1 to 3-4 was manufactured under manufacturing conditions shown in Tables 2-1 and 2-2. In the item "Water Cooling Stop Temperature during First Cooling" of Table 2-1, "OK" represents an example where the water cooling stop temperature after each water cooling step of the multiple steps of accelerated cooling is 500°C or lower, and NG represents an example where one or some of the cooling stop temperature exceeds 500°C.

In addition, regarding the cooling rate in the first cooling, only the first cooling rate is shown. However, the second or subsequent cooling rate was the same as the first cooling rate.

Nos. 1 to 22 and 54 to 56 are steel plates according to the present invention, and Nos. 23 to 53 are steel plates according to Comparative Examples.

[Table 1-1]

| Steel No. | Chemical Component (mass%) *Remainder: Fe and Impurities | | | | | | | | | | |
|---|---|---|---|---|---|---|---|---|---|---|---|
| | C | Si | Mn | P | S | Al | Ti | Nb | N | Ca | O |
| 1 | 0.052 | 0.10 | 1.32 | 0.005 | 0.0005 | 0.004 | 0.012 | 0.030 | 0.0025 | 0.0015 | 0.0025 |
| 2 | 0.044 | 0.13 | 1.35 | 0.008 | 0.0006 | 0.013 | 0.013 | 0.040 | 0.0030 | 0.0017 | 0.0026 |
| 3 | 0.052 | 0.08 | 1.45 | 0.003 | 0.0008 | 0.008 | 0.012 | 0.030 | 0.0021 | 0.0021 | 0.0016 |
| 4 | 0.055 | 0.07 | 1.52 | 0.004 | 0.0003 | 0.010 | 0.016 | 0.060 | 0.0018 | 0.0011 | 0.0032 |
| 5 | 0.055 | 0.25 | 1.45 | 0.009 | 0.0006 | 0.007 | 0.012 | 0.054 | 0.0015 | 0.0017 | 0.0021 |
| 6 | 0.053 | 0.10 | 1.25 | 0.008 | 0.0004 | 0.016 | 0.012 | 0.026 | 0.0023 | 0.0013 | 0.0016 |
| 7 | 0.048 | 0.02 | 1.36 | 0.006 | 0.0006 | 0.005 | 0.013 | 0.030 | 0.0031 | 0.0017 | 0.0019 |
| 8 | 0.050 | 0.15 | 1.38 | 0.007 | 0.0005 | 0.013 | 0.008 | 0.050 | 0.0035 | 0.0015 | 0.0015 |
| 9 | 0.049 | 0.17 | 1.41 | 0.005 | 0.0002 | 0.013 | 0.010 | 0.030 | 0.0026 | 0.0009 | 0.0016 |
| 10 | 0.058 | 0.20 | 1.43 | 0.008 | 0.0004 | 0.004 | 0.020 | 0.050 | 0.0025 | 0.0013 | 0.0020 |
| 11 | 0.063 | 0.22 | 1.36 | 0.006 | 0.0003 | 0.004 | 0.024 | 0.032 | 0.0026 | 0.0011 | 0.0032 |
| 12 | 0.057 | 0.25 | 1.29 | 0.004 | 0.0006 | 0.010 | 0.012 | 0.030 | 0.0035 | 0.0017 | 0.0016 |
| 13 | 0.060 | 0.31 | 1.42 | 0.006 | 0.0008 | 0.015 | 0.024 | 0.010 | 0.0024 | 0.0021 | 0.0013 |
| 14 | 0.055 | 0.09 | 1.46 | 0.006 | 0.0006 | 0.001 | 0.013 | 0.040 | 0.0034 | 0.0017 | 0.0014 |
| 15 | 0.051 | 0.28 | 1.42 | 0.004 | 0.0004 | 0.006 | 0.012 | 0.012 | 0.0026 | 0.0013 | 0.0016 |
| 16 | 0.058 | 0.32 | 1.39 | 0.007 | 0.0006 | 0.006 | 0.008 | 0.006 | 0.0024 | 0.0017 | 0.0019 |
| 17 | 0.045 | 0.49 | 1.32 | 0.008 | 0.0006 | 0.003 | 0.010 | 0.020 | 0.0023 | 0.0017 | 0.0021 |
| 18 | 0.052 | 0.24 | 1.29 | 0.005 | 0.0006 | 0.003 | 0.005 | 0.060 | 0.0023 | 0.0017 | 0.0016 |
| 19 | 0.051 | 0.28 | 1.42 | 0.009 | 0.0003 | 0.016 | 0.026 | 0.013 | 0.0029 | 0.0011 | 0.0012 |
| 20 | 0.051 | 0.12 | 1.45 | 0.010 | 0.0005 | 0.016 | 0.012 | 0.024 | 0.0033 | 0.0015 | 0.0016 |
| 21 | 0.053 | 0.31 | 1.51 | 0.005 | 0.0008 | 0.003 | 0.017 | 0.030 | 0.0032 | 0.0021 | 0.0015 |
| 22 | 0.053 | 0.31 | 1.32 | 0.004 | 0.0015 | 0.013 | 0.018 | 0.040 | 0.0026 | 0.0035 | 0.0014 |
| 38 | 0.054 | 0.25 | 1.50 | 0.010 | 0.0013 | 0.032 | 0.012 | 0.054 | 0.0016 | 0.0032 | 0.0019 |
| 23 | <u>0.250</u> | 0.18 | 1.29 | 0.005 | 0.0007 | 0.005 | 0.012 | 0.050 | 0.0029 | 0.0019 | 0.0021 |
| 24 | <u>0.010</u> | 0.20 | 1.20 | 0.010 | 0.0010 | 0.012 | 0.012 | 0.040 | 0.0015 | 0.0025 | 0.0020 |
| 25 | 0.060 | 0.23 | <u>2.60</u> | 0.007 | 0.0015 | 0.016 | 0.013 | 0.030 | 0.0028 | 0.0035 | 0.0014 |
| 26 | 0.059 | 0.12 | 1.35 | <u>0.030</u> | 0.0016 | 0.015 | 0.008 | 0.014 | 0.0027 | 0.0037 | 0.0012 |
| 27 | 0.058 | 0.25 | 1.33 | 0.006 | <u>0.0050</u> | 0.009 | 0.019 | 0.040 | 0.0032 | 0.0026 | 0.0016 |
| 28 | 0.054 | 0.17 | 1.32 | 0.007 | 0.0003 | <u>0.080</u> | 0.017 | 0.021 | 0.0031 | 0.0011 | 0.0019 |

(continued)

| Steel No. | Chemical Component (mass%) *Remainder: Fe and Impurities | | | | | | | | | | |
|---|---|---|---|---|---|---|---|---|---|---|---|
| | C | Si | Mn | P | S | Al | Ti | Nb | N | Ca | O |
| 29 | 0.058 | 0.05 | 1.36 | 0.005 | 0.0006 | 0.010 | 0.050 | 0.030 | 0.0026 | 0.0017 | 0.0015 |
| 30 | 0.059 | 0.09 | 1.40 | 0.009 | 0.0009 | 0.003 | 0.013 | 0.150 | 0.0025 | 0.0023 | 0.0014 |
| 31 | 0.070 | 0.12 | 1.55 | 0.005 | 0.0008 | 0.014 | 0.012 | 0.014 | 0.0085 | 0.0021 | 0.0023 |
| 32 | 0.053 | 0.05 | 1.36 | 0.007 | 0.0015 | 0.016 | 0.010 | 0.030 | 0.0031 | 0.0001 | 0.0026 |
| 33 | 0.046 | 0.01 | 1.26 | 0.008 | 0.0016 | 0.002 | 0.010 | 0.030 | 0.0016 | 0.0120 | 0.0016 |
| 34 | 0.052 | 0.23 | 1.32 | 0.008 | 0.0010 | 0.012 | 0.013 | 0.035 | 0.0025 | 0.0025 | 0.0070 |
| 35 | 0.055 | 0.39 | 1.32 | 0.015 | 0.0013 | 0.021 | 0.011 | 0.040 | 0.0012 | 0.0026 | 0.0016 |
| 36 | 0.042 | 0.05 | 1.45 | 0.006 | 0.0018 | 0.016 | 0.009 | 0.055 | 0.0016 | 0.0015 | 0.0015 |
| 37 | 0.056 | 0.15 | 1.54 | 0.008 | 0.0020 | 0.025 | 0.008 | 0.062 | 0.0018 | 0.0026 | 0.0016 |
| 39 | 0.059 | 0.35 | 1.46 | 0.016 | 0.0023 | 0.015 | 0.011 | 0.062 | 0.0045 | 0.0019 | 0.0021 |
| 40 | 0.130 | 0.18 | 1.29 | 0.005 | 0.0007 | 0.005 | 0.012 | 0.050 | 0.0029 | 0.0019 | 0.0021 |
| 41 | 0.070 | 3.00 | 1.00 | 0.010 | 0.0010 | 0.012 | 0.012 | 0.040 | 0.0015 | 0.0025 | 0.0020 |
| 42 | 0.055 | 0.23 | 2.60 | 0.007 | 0.0015 | 0.016 | 0.013 | 0.030 | 0.0028 | 0.0035 | 0.0014 |
| 44 | 0.031 | 0.05 | 0.90 | 0.008 | 0.0006 | 0.013 | 0.013 | 0.040 | 0.0030 | 0.0017 | 0.0026 |
| 45 | 0.070 | 0.08 | 1.50 | 0.003 | 0.0008 | 0.008 | 0.012 | 0.030 | 0.0021 | 0.0021 | 0.0016 |

An underline value represents that the value was outside the range of the present invention.

[Table 1-2]

| Steel No. | Chemical Component (mass%) *Remainder: Fe and Impurities | | | | | | | ESSP | Ceq |
|---|---|---|---|---|---|---|---|---|---|
| | Cr | Mo | Ni | Cu | V | Mg | REM | | |
| 1 | | | | | | | | 1.7 | 0.27 |
| 2 | 0.40 | | | | | | | 1.5 | 0.35 |
| 3 | | | | | 0.06 | | | 1.7 | 0.31 |
| 4 | | 0.30 | 0.30 | | | | | 1.8 | 0.39 |
| 5 | | | | | | | | 1.7 | 0.30 |
| 6 | 0.40 | 0.30 | 0.40 | 0.40 | | | | 2.1 | 0.43 |
| 7 | | | | | 0.04 | | | 1.7 | 0.29 |
| 8 | | 0.30 | 0.20 | 0.20 | | | | 2.0 | 0.35 |
| 9 | | | | | | | | 2.9 | 0.28 |
| 10 | 0.40 | | 0.30 | | | | | 2.0 | 0.40 |
| 11 | | | | | | | | 1.8 | 0.29 |
| 12 | | | | | | 0.0025 | | 1.8 | 0.27 |
| 13 | | | | | | | 0.0030 | 1.8 | 0.30 |
| 14 | | 0.30 | | | | | | 1.9 | 0.36 |
| 15 | | | | | | | | 2.1 | 0.29 |
| 16 | | | | | | | | 1.7 | 0.29 |
| 17 | | | | | 0.05 | | | 1.7 | 0.28 |
| 18 | | | 0.30 | 0.30 | | | | 1.8 | 0.29 |

(continued)

| Steel No. | Chemical Component (mass%) *Remainder: Fe and Impurities | | | | | | | ESSP | Ceq |
|---|---|---|---|---|---|---|---|---|---|
| | Cr | Mo | Ni | Cu | V | Mg | REM | | |
| 19 | | | | | | | | 2.5 | 0.29 |
| 20 | | | | | | | | 1.9 | 0.29 |
| 21 | | | | | | | | 1.7 | 0.30 |
| 22 | | | | | | | | 1.5 | 0.27 |
| 38 | | | | | | | | 1.5 | 0.30 |
| 23 | | | | | | | | 1.6 | 0.47 |
| 24 | | | | | | | | 1.5 | 0.21 |
| 25 | | | | | | | | 1.5 | 0.49 |
| 26 | | | | | | | | 1.6 | 0.28 |
| 27 | | | | | | | | <u>0.3</u> | 0.28 |
| 28 | | | | | | 0.0024 | | 2.2 | 0.27 |
| 29 | | | | | | | | 1.8 | 0.28 |
| 30 | | | | | | | | 1.7 | 0.29 |
| 31 | 0.40 | 0.20 | 0.40 | 0.40 | | | | 1.5 | 0.48 |
| 32 | | | | | | | | <u>0.0</u> | 0.28 |
| 33 | | | | | | 0.0035 | | <u>4.8</u> | 0.26 |
| 34 | | | | | | | | <u>0.3</u> | 0.27 |
| 35 | | | | | | | | <u>1.3</u> | 0.28 |
| 36 | | | | | | | | <u>0.5</u> | 0.28 |
| 37 | | | | | | | | <u>0.8</u> | 0.31 |
| 39 | | | | | | | | <u>0.5</u> | 0.30 |
| 40 | | | | | | | | 1.6 | 0.35 |
| 41 | 0.40 | | | | | | | 1.5 | 0.32 |
| 42 | | | | | | | | 1.5 | 0.49 |
| 44 | | | | | | 0.0020 | | 1.5 | <u>0.18</u> |
| 45 | 0.40 | 0.40 | 0.40 | 0.40 | | | 0.0014 | 1.7 | <u>0.51</u> |

An underline value represents that the value was outside the range of the present invention.

[Table 2-1]

| Test No. | Steel No. | Heating Temperature °C | Rolling Finishing Temperature °C | Ar3 °C | Cooling Start Temperature °C | Cooling Stop Temperature during First Cooling °C | Cooling Stop Temperature during First Water Cooling of First Cooling °C | Maximum Attainment Temperature after Stopping First Water Cooling of First Cooling °C |
|---|---|---|---|---|---|---|---|---|
| 1 | 1 | 1230 | 822 | 772 | 782 | OK | 480 | 570 |
| 2 | 2 | 1200 | 824 | 774 | 784 | OK | 470 | 600 |
| 3 | 3 | 1210 | 826 | 776 | 786 | OK | 480 | 590 |

(continued)

| Test No. | Steel No. | Heating Temperature °C | Rolling Finishing Temperature °C | Ar3 °C | Cooling Start Temperature °C | Cooling Stop Temperature during First Cooling °C | Cooling Stop Temperature during First Water Cooling of First Cooling °C | Maximum Attainment Temperature after Stopping First Water Cooling of First Cooling °C |
|---|---|---|---|---|---|---|---|---|
| 4 | 4 | 1200 | 809 | 759 | 769 | OK | 470 | 600 |
| 5 | 5 | 1200 | 817 | 767 | 777 | OK | 450 | 560 |
| 6 | 6 | 1180 | 826 | 776 | 786 | OK | 490 | 680 |
| 7 | 7 | 1250 | 827 | 777 | 787 | OK | 450 | 550 |
| 8 | 8 | 1200 | 821 | 771 | 781 | OK | 450 | 570 |
| 9 | 9 | 1240 | 820 | 770 | 780 | OK | 470 | 590 |
| 10 | 10 | 1210 | 816 | 766 | 776 | OK | 460 | 580 |
| 11 | 11 | 1230 | 819 | 769 | 779 | OK | 450 | 565 |
| 12 | 12 | 1200 | 826 | 776 | 786 | OK | 460 | 560 |
| 13 | 13 | 1230 | 818 | 768 | 778 | OK | 450 | 570 |
| 14 | 14 | 1210 | 813 | 763 | 773 | OK | 400 | 560 |
| 15 | 15 | 1200 | 821 | 771 | 781 | OK | 420 | 550 |
| 16 | 16 | 1200 | 821 | 771 | 781 | OK | 440 | 550 |
| 17 | 17 | 1210 | 844 | 794 | 804 | OK | 430 | 560 |
| 18 | 18 | 1180 | 827 | 777 | 787 | OK | 400 | 570 |
| 19 | 19 | 1250 | 821 | 771 | 781 | OK | 450 | 550 |
| 20 | 20 | 1200 | 816 | 766 | 776 | OK | 480 | 550 |
| 21 | 21 | 1210 | 816 | 766 | 776 | OK | 450 | 570 |
| 22 | 22 | 1200 | 827 | 777 | 787 | OK | 400 | 570 |
| 54 | 2 | 1180 | 820 | 774 | 794 | OK | 430 | 600 |
| 55 | 2 | 1190 | 830 | 774 | 800 | OK | 480 | 650 |
| 56 | 2 | 1200 | 840 | 774 | 810 | OK | 450 | 620 |
| 23 | 23 | 1200 | 900 | 698 | 708 | OK | 400 | 550 |
| 24 | 24 | 1000 | 800 | 798 | 800 | OK | 410 | 580 |
| 25 | 25 | 1170 | 750 | 697 | 707 | OK | 420 | 590 |
| 26 | 26 | 1200 | 818 | 768 | 778 | OK | 400 | 570 |
| 27 | 27 | 1240 | 823 | 773 | 783 | OK | 405 | 575 |
| 28 | 28 | 1200 | 823 | 773 | 783 | OK | 430 | 600 |
| 29 | 29 | 1240 | 816 | 766 | 776 | OK | 380 | 550 |
| *30* | 30 | 1200 | 815 | 765 | 775 | OK | 400 | 570 |
| 31 | 31 | 1180 | 814 | 752 | 762 | OK | 410 | 580 |
| 32 | 32 | 1240 | 818 | 768 | 778 | OK | 380 | 550 |
| 33 | 33 | 1200 | 826 | 77 6 | 786 | OK | 380 | 550 |
| 34 | 34 | 1230 | 825 | 775 | 785 | OK | 390 | 560 |

(continued)

| Test No. | Steel No. | Heating Temperature °C | Rolling Finishing Temperature °C | Ar3 °C | Cooling Start Temperature °C | Cooling Stop Temperature during First Cooling °C | Cooling Stop Temperature during First Water Cooling of First Cooling °C | Maximum Attainment Temperature after Stopping First Water Cooling of First Cooling °C |
|---|---|---|---|---|---|---|---|---|
| 35 | 35 | 900 | 780 | 778 | 780 | OK | 400 | 570 |
| 36 | 36 | 1210 | 740 | 767 | 740 | OK | 380 | 550 |
| 37 | 37 | 1200 | 809 | 759 | 769 | OK | 380 | 550 |
| 38 | 38 | 1215 | 815 | 765 | 775 | OK | 490 | 700 |
| 39 | 39 | 1200 | 817 | 767 | 777 | OK | 430 | 500 |
| 40 | 40 | 1200 | 810 | 745 | 755 | OK | 400 | 570 |
| 41 | 41 | 1180 | 870 | 854 | 864 | OK | 410 | 580 |
| 42 | 42 | 1190 | 750 | 699 | 709 | OK | 420 | 590 |
| 43 | 31 | 1210 | 780 | 752 | 762 | OK | 380 | 550 |
| 44 | 44 | 1230 | 830 | 804 | 814 | OK | 400 | 570 |
| 45 | 45 | 1240 | 770 | 754 | 764 | OK | 380 | 550 |
| 46 | 29 | 1150 | 780 | 766 | 776 | OK | 410 | 560 |
| 47 | 2 | 1300 | 790 | 774 | 784 | OK | 430 | 600 |
| 48 | 2 | 900 | 780 | 774 | 784 | OK | 420 | 590 |
| 49 | 2 | 1200 | 710 | 774 | 784 | OK | 400 | 570 |
| 50 | 2 | 1190 | 800 | 774 | 784 | NG | 520 | 560 |
| 51 | 2 | 1180 | 810 | 774 | 784 | OK | 400 | 500 |
| 52 | 2 | 1150 | 820 | 774 | 784 | OK | 390 | 540 |
| 53 | 2 | 1160 | 800 | 774 | 784 | OK | 400 | 570 |

[Table 2-2]

| Test No. | Cooling Rate during First Water Coling of First Cooling °C/s | Number of Times of Recuperating exceeding 500°C | Cooling Stop Temperature during Second Cooling °C | Cooling Rate during Second Cooling °C/h | Heat Treatment on Weld °C | AC₁ |
|---|---|---|---|---|---|---|
| 1 | 100 | 3 | 420 | 950 | - | 712 |
| 2 | 150 | 3 | 450 | 825 | - | 712 |
| 3 | 100 | 3 | 440 | 925 | - | 710 |
| 4 | 70 | 3 | 450 | 1000 | - | 709 |
| 5 | 50 | 3 | 410 | 900 | 550 | 715 |
| 6 | 100 | 4 | 490 | 975 | - | 713 |
| 7 | 150 | 3 | 400 | 875 | - | 709 |
| 8 | 100 | 3 | 420 | 850 | - | 713 |
| 9 | 50 | 3 | 440 | 950 | | 713 |
| 10 | 150 | 3 | 430 | 900 | - | 714 |

(continued)

| Test No. | Cooling Rate during First Water Coling of First Cooling °C/s | Number of Times of Recuperating exceeding 500°C | Cooling Stop Temperature during Second Cooling °C | Cooling Rate during Second Cooling °C/h | Heat Treatment on Weld °C | AC$_1$ |
|---|---|---|---|---|---|---|
| 11 | 100 | 3 | 415 | 925 | - | 715 |
| 12 | 200 | 3 | 410 | 875 | - | 716 |
| 13 | 150 | 3 | 420 | 975 | - | 717 |
| 14 | 50 | 3 | 410 | 900 | - | 710 |
| 15 | 100 | 3 | 400 | 950 | - | 716 |
| 16 | 50 | 3 | 400 | 975 | - | 717 |
| 17 | 200 | 3 | 410 | 825 | - | 723 |
| 18 | 80 | 3 | 420 | 900 | - | 716 |
| 19 | 100 | 3 | 400 | 975 | 520 | 716 |
| 20 | 150 | 3 | 400 | 1025 | - | 711 |
| 21 | 200 | 3 | 420 | 925 | - | 716 |
| 22 | 160 | 3 | 420 | 950 | - | 718 |
| 54 | 10 | 3 | 430 | 925 | - | 712 |
| 55 | 500 | 4 | 460 | 800 | - | 712 |
| 56 | 200 | 3 | 490 | 425 | - | 712 |
| 23 | 200 | 3 | 400 | 900 | - | 714 |
| 24 | 70 | 3 | 500 | 550 | - | 716 |
| 25 | 50 | 3 | 440 | 1050 | 600 | 702 |
| 26 | 70 | 3 | 420 | 950 | | 712 |
| 27 | 50 | 3 | 425 | 825 | - | 716 |
| 28 | 130 | 3 | 450 | 975 | - | 714 |
| 29 | 200 | 3 | 400 | 950 | - | 710 |
| 30 | 230 | 3 | 420 | 975 | - | 711 |
| 31 | 50 | 3 | 430 | 900 | - | 710 |
| 32 | 140 | 3 | 400 | 825 | - | 710 |
| 33 | 60 | 3 | 400 | 875 | - | 710 |
| 34 | 120 | 3 | 410 | 850 | - | 716 |
| 35 | 300 | 3 | 500 | 550 | - | 720 |
| 36 | 100 | 3 | 400 | 500 | - | 709 |
| 37 | 300 | 3 | 25 | 900 | - | 711 |
| 38 | 50 | 3 | 600 | 975 | 680 | 714 |
| 39 | 150 | 1 | 400 | 1050 | - | 718 |
| 40 | 110 | 3 | 420 | 900 | - | 714 |
| 41 | 140 | 3 | 430 | 800 | - | 800 |
| 42 | 200 | 3 | 440 | 1000 | - | 702 |
| 43 | 100 | 3 | 400 | 950 | - | 710 |
| 44 | 300 | 3 | 420 | 900 | 550 | 715 |

(continued)

| Test No. | Cooling Rate during First Water Coling of First Cooling °C/s | Number of Times of Recuperating exceeding 500°C | Cooling Stop Temperature during Second Cooling °C | Cooling Rate during Second Cooling °C/h | Heat Treatment on Weld °C | AC$_1$ |
|---|---|---|---|---|---|---|
| 45 | 50 | 3 | 400 | 800 | - | 709 |
| 46 | 140 | 3 | 400 | 925 | - | 710 |
| 47 | 180 | 3 | 450 | 975 | - | 712 |
| 48 | 30 | 3 | 440 | 800 | - | 712 |
| 49 | 30 | 3 | 420 | 925 | 580 | 712 |
| 50 | 50 | 3 | 410 | 850 | - | 712 |
| 51 | 100 | 1 | 400 | 925 | - | 712 |
| 52 | 50 | 2 | 400 | 875 | - | 712 |
| 53 | 0.1 | 3 | 420 | 1150 | - | 712 |

An API 5L full thickness tensile test piece was collected from the obtained steel plate, and the tensile strength was measured according to API 5L.

In addition, by measuring the hardness of the surface layer in a range up to a depth of 1.0 mm from the surface, the microstructure of the surface layer was observed with a scanning electron microscope.

In addition, for reference, the maximum hardness of the 1/2t portion was also measured.

(Maximum Hardness of Surface Layer)

300 mm×300 mm steel plates were cut out by gas cutting from positions of 1/4, 1/2, and 3/4 from a width-direction end portion (corresponding to the seam portion in the case of the steel pipe) of the steel plate in the width direction of the steel plate. Block test pieces having a length of 20 mm and a width of 20 mm were collected by mechanical cutting from the centers of the cut steel plates and were polished by mechanical polishing. Regarding each of the block test pieces, the hardness was measured using a Vickers hardness meter (load: 100 g) at 100 points in total (that is, 300 points in total in the three test pieces) that were obtained by setting a position of 0.1 mm from the steel plate surface as a starting point, setting 10 points from the starting point in a through-thickness direction at an interval of 0.1 mm, and setting 10 points at the same depth at an interval of 1.0 mm in the width direction. As a result, the maximum hardness was obtained.

At this time, even when one measurement point having a hardness of higher than 250 Hv was present, unless two or more measurement points did not continuously appear in the through-thickness direction, this point as an abnormal point was not adopted, and the second highest value was obtained as the maximum hardness. On the other hand, when two or more measurement points having a hardness of higher than 250 Hv were continuously present in the through-thickness direction, the highest value was obtained as the maximum hardness.

(Microstructure Observation)

In order to make the microstructure of the surface layer appear, the polished test piece was dipped in a mixed solution including 3% nitric acid 97% ethanol for several seconds to several tens of seconds to etch the test piece, and positions of 0.1 mm, 0.2 mm, and 0.5 mm from the surface were observed using a scanning electron microscope at a magnification of 1000-fold. The area fraction of each microstructure was the average of the values in these visual fields.

The results are shown in Table 3. The area fraction of the remainder structure in Table 3 represents the area fraction of a microstructure other than "granular bainite, acicular ferrite, tempered bainite, and tempered martensite".

The microstructure of a position of 5 mm from the surface was observed using the same method.

(Maximum Hardness of 1/2t Portion (Thickness Middle Portion))

The hardnesses of ten points in the vicinity of the 1/2t portion in the longitudinal direction at a pitch of 1.0 mm were measured to obtain the maximum hardness.

## EP 3 686 304 B1

[Table 3-1]

| Test No. | Primary Microstructure of Surface Layer of Steel Plate | Total Area Fraction of Granular Bainite, Acicular Ferrite, Tempered Bainite, and Tempered Martensite % | Area Fraction of Residual Microstructure % |
|---|---|---|---|
| 1 | Acicular Ferrite+ Granular Bainite | 100 | 0 |
| 2 | Acicular Ferrite+ Granular Bainite | 95 | 5 |
| 3 | Acicular Ferrite+ Granular Bainite | 98 | 2 |
| 4 | Acicular Ferrite+ Granular Bainite | 97 | 3 |
| 5 | Acicular Ferrite+ Granular Bainite | 96 | 4 |
| 6 | Acicular Ferrite+ Granular Bainite | 97 | 3 |
| 7 | Acicular Ferrite+ Granular Bainite | 95 | 5 |
| 8 | Acicular Ferrite+ Granular Bainite | 97 | 3 |
| 9 | Acicular Ferrite+ Granular Bainite | 97 | 3 |
| 10 | Acicular Ferrite+ Granular Bainite | 97 | 3 |
| 11 | Acicular Ferrite+ Granular Bainite | 94 | 6 |
| 12 | Acicular Ferrite+ Granular Bainite | 92 | 8 |
| 13 | Acicular Ferrite+ Granular Bainite | 97 | 3 |
| 14 | Acicular Ferrite+ Granular Bainite | 96 | 4 |
| 15 | Acicular Ferrite+ Granular Bainite | 100 | 0 |
| 16 | Acicular Ferrite+ Granular Bainite | 94 | 6 |
| 17 | Acicular Ferrite+ Granular Bainite | 100 | 0 |
| 18 | Acicular Ferrite+ Granular Bainite | 94 | 6 |
| 19 | Acicular Ferrite+ Granular Bainite | 96 | 4 |
| 20 | Acicular Ferrite+ Granular Bainite | 97 | 3 |
| 21 | Acicular Ferrite+ Granular Bainite | 95 | 5 |
| 22 | Acicular Ferrite+ Granular Bainite | 97 | 3 |
| 54 | Granular Bainite+ Acicular Ferrite | 95 | 5 |
| 55 | (Tempered Martensite or Tempered Bainite)+Granular Bainite | 96 | 4 |
| 56 | Acicular Ferrite+ Granular Bainite | 94 | 6 |

[Table 3-2]

| Test No. | Primary Microstructure of Surface Layer of Steel Plate | Total Area Fraction of Granular Bainite, Acicular Ferrite, Tempered Bainite, and Tempered Martensite % | Area Fraction of Residual Microstructure % |
|---|---|---|---|
| 23 | Acicular Ferrite+Granular Bainite+(Tempered Martensite or Tempered Bainite) | 79 | 21 |
| 24 | Ferrite | 5 | 95 |
| 25 | Granular Bainite+(Tempered Martensite or Tempered Bainite) | 70 | 30 |
| 26 | Acicular Ferrite+Granular Bainite | 93 | 7 |
| 27 | Acicular Ferrite+Granular Bainite | 93 | 7 |

(continued)

| Test No. | Primary Microstructure of Surface Layer of Steel Plate | Total Area Fraction of Granular Bainite, Acicular Ferrite, Tempered Bainite, and Tempered Martensite % | Area Fraction of Residual Microstructure % |
|---|---|---|---|
| 28 | Acicular Ferrite+Granular Bainite | 92 | 8 |
| 29 | Acicular Ferrite+Granular Bainite | 92 | 8 |
| 30 | Acicular Ferrite+Granular Bainite | 93 | 7 |
| 31 | Acicular Ferrite+Granular Bainite | 94 | 6 |
| 32 | Acicular Ferrite+Granular Bainite | 92 | 8 |
| 33 | Acicular Ferrite+Granular Bainite | 90 | 10 |
| 34 | Acicular Ferrite+Granular Bainite | 93 | 7 |
| 35 | Ferrite+Pearlite | 25 | 75 |
| 36 | Worked Ferrite+Acicular Ferrite+Granular Bainite | 77 | 23 |
| 37 | Acicular Ferrite+Granular Bainite+(Tempered Martensite or Tempered Bainite) | 78 | 22 |
| 38 | Ferrite+Acicular Ferrite+Granular Bainite | 79 | 21 |
| 39 | Acicular Ferrite+Granular Bainite+(Tempered Martensite or Tempered Bainite) | 79 | 21 |
| 40 | Acicular Ferrite+Granular Bainite+(Tempered Martensite or Tempered Bainite) | 75 | 25 |
| 41 | Acicular Ferrite+Granular Bainite+(Tempered Martensite or Tempered Bainite)+Residual Austenite | 79 | 21 |
| 42 | Granular Bainite+(Tempered Martensite or Tempered Bainite) | 78 | 22 |
| 43 | Granular Bainite+(Tempered Martensite or Tempered Bainite) | 78 | 22 |
| 44 | Ferrite | 5 | 95 |
| 45 | Granular Bainite+(Tempered Martensite or Tempered Bainite) | 78 | 22 |
| 46 | Acicular Ferrite+Granular Bainite | 95 | 5 |
| 47 | Acicular Ferrite+Granular Bainite+(Tempered Martensite or Tempered Bainite) | 79 | 21 |
| 48 | Ferrite+Pearlite | 20 | 80 |
| 49 | Worked Ferrite+Acicular Ferrite+Granular Bainite | 77 | 23 |
| 50 | Granular Bainite+(Tempered Martensite or Tempered Bainite) | 60 | 40 |
| 51 | Granular Bainite+(Tempered Martensite or Tempered Bainite) | 70 | 30 |
| 52 | Granular Bainite+(Tempered Martensite or Tempered Bainite) | 76 | 24 |
| 53 | Ferrite+Pearlite | 0 | 100 |

[Table 3-3]

| Test No. | Microstructure at Position of 5 mm from Surface | Maximum Hardness of Surface Layer Hv | Maximum Hardness of Thickness Middle Portion Hv | Tensile Strength MPa | Plate Thickness mm |
|---|---|---|---|---|---|
| 1 | Acicular Ferrite+Granular Bainite | 213 | 223 | 587 | 14 |
| 2 | Acicular Ferrite+Granular Bainite | 221 | 230 | 612 | 19 |
| 3 | Acicular Ferrite+Granular Bainite | 238 | 242 | 668 | 15 |
| 4 | Acicular Ferrite+Granular Bainite | 230 | 240 | 641 | 12 |
| 5 | Acicular Ferrite+Granular Bainite | 229 | 239 | 640 | 16 |
| 6 | Acicular Ferrite+Granular Bainite | 230 | 240 | 641 | 13 |
| 7 | Acicular Ferrite+Granular Bainite | 222 | 232 | 615 | 17 |
| 8 | Acicular Ferrite+Granular Bainite | 222 | 231 | 615 | 18 |
| 9 | Acicular Ferrite+Granular Bainite | 221 | 231 | 613 | 14 |
| 10 | Acicular Ferrite+Granular Bainite | 209 | 219 | 575 | 16 |
| 11 | Acicular Ferrite+Granular Bainite | 225 | 234 | 625 | 15 |
| 12 | Acicular Ferrite+Granular Bainite | 213 | 223 | 587 | 17 |
| 13 | Acicular Ferrite+Granular Bainite | 229 | 239 | 640 | 13 |
| 14 | Acicular Ferrite+Granular Bainite | 210 | 219 | 576 | 16 |
| 15 | Acicular Ferrite+Granular Bainite | 223 | 233 | 620 | 14 |
| 16 | Acicular Ferrite+Granular Bainite | 225 | 234 | 625 | 13 |
| 17 | Acicular Ferrite+Granular Bainite | 217 | 227 | 600 | 19 |
| 18 | Acicular Ferrite+Granular Bainite | 223 | 233 | 619 | 16 |
| 19 | Acicular Ferrite+Granular Bainite | 223 | 233 | 620 | 13 |
| 20 | Acicular Ferrite+Granular Bainite | 227 | 236 | 631 | 11 |
| 21 | Acicular Ferrite+Granular Bainite | 235 | 242 | 657 | 15 |
| 22 | Acicular Ferrite+Granular Bainite | 213 | 223 | 589 | 14 |

(continued)

| Test No. | Microstructure at Position of 5 mm from Surface | Maximum Hardness of Surface Layer Hv | Maximum Hardness of Thickness Middle Portion Hv | Tensile Strength MPa | Plate Thickness mm |
|---|---|---|---|---|---|
| 54 | Granular Bainite+ Bainite+ Acicular Ferrite | 218 | 228 | 600 | 15 |
| 55 | (Tempered Martensite or Tempered Bainite)+ Granular Bainite | 225 | 235 | 625 | 20 |
| 56 | Acicular Ferrite+Granular Bainite | 208 | 218 | 570 | 35 |

[Table 3-4]

| Test No. | Microstructure at Position of 5 mm from Surface | Maximum Hardness of Surface Layer Hv | Maximum Hardness of Thickness Middle Portion Hv | Tensile Strength MPa | Plate Thickness mm |
|---|---|---|---|---|---|
| 23 | Acicular Ferrite+Granular Bainite+Bainite | 262 | 292 | 744 | 16 |
| 24 | Ferrite | 177 | 187 | 472 | 30 |
| 25 | Granular Bainite+Martensite | 402 | 412 | 1377 | 10 |
| 26 | Acicular Ferrite+Granular Bainite | 270 | 279 | 613 | 14 |
| 27 | Acicular Ferrite+Granular Bainite | 218 | 228 | 603 | 19 |
| 28 | Acicular Ferrite+Granular Bainite | 214 | 224 | 591 | 13 |
| 29 | Acicular Ferrite+Granular Bainite | 260 | 270 | 614 | 14 |
| 30 | Acicular Ferrite+Granular Bainite | 255 | 265 | 631 | 13 |
| 31 | Acicular Ferrite+Granular Bainite | 271 | 280 | 642 | 16 |
| 32 | Acicular Ferrite+Granular Bainite | 218 | 228 | 603 | 19 |
| 33 | Acicular Ferrite+Granular Bainite | 202 | 212 | 552 | 17 |
| 34 | Acicular Ferrite+Granular Bainite | 213 | 223 | 587 | 18 |
| 35 | Ferrite·Pearlite | 216 | 250 | 505 | 30 |
| 36 | Worked Ferrite+Acicular Ferrite+Granular Bainite | 250 | 260 | 612 | 32 |
| 37 | Acicular Ferrite+Granular Bainite+(Tempered Martensite or Tempered Bainite) | 255 | 260 | 674 | 16 |
| 38 | Ferrite+Acicular Ferrite+Granular Bainite | 206 | 216 | 510 | 13 |
| 39 | Acicular Ferrite+Granular Bainite+(Tempered Martensite or Tempered Bainite) | 255 | 265 | 652 | 10 |
| 40 | Acicular Ferrite+Granular Bainite | 267 | 297 | 759 | 16 |
| 41 | Acicular Ferrite+Granular Bainite+Residual Austenite | 251 | 281 | 697 | 20 |
| 42 | Granular Bainite+(Tempered Martensite or Tempered Bainite) | 366 | 396 | 1074 | 12 |

(continued)

| Test No. | Microstructure at Position of 5 mm from Surface | Maximum Hardness of Surface Layer Hv | Maximum Hardness of Thickness Middle Portion Hv | Tensile Strength MPa | Plate Thickness mm |
|---|---|---|---|---|---|
| 43 | Granular Bainite+(Tempered Martensite or Tempered Bainite) | 357 | 387 | 1045 | 14 |
| 44 | Ferrite | 154 | 184 | 398 | 16 |
| 45 | Granular Bainite+(Tempered Martensite or Tempered Bainite) | 378 | 408 | 1115 | 20 |
| 46 | Acicular Ferrite+Granular Bainite | 226 | 248 | 626 | 15 |
| 47 | Acicular Ferrite+Granular Bainite+Martensite | 255 | 265 | 670 | 13 |
| 48 | Ferrite Pearlite | 176 | 187 | 500 | 20 |
| 49 | Worked Ferrite+Acicular Ferrite+Granular Bainite | 225 | 245 | 624 | 15 |
| 50 | Granular Bainite+(Tempered Martensite or Tempered Bainite) | 252 | 265 | 710 | 18 |
| 51 | Granular Bainite+(Tempered Martensite or Tempered Bainite) | 260 | 267 | 740 | 15 |
| 52 | Granular Bainite+(Tempered Martensite or Tempered Bainite) | 255 | 269 | 730 | 17 |
| 53 | Ferrite Pearlite | 186 | 216 | 500 | 30 |

As shown in Table 3, in Test Nos. 1 to 22 and 54 to 56 according to Examples, the surface layer (surface layer in a range up to a depth of 1.0 mm from the surface) had the predetermined microstructure, the maximum hardness thereof was 250 Hv or lower.

(Example 2)

The steel plate shown in Table 3 was cold-worked into a cylindrical shape, opposite end portions of the cylindrical steel plate were made to abut against each other, and the end portions were welded by submerged are welding (SAW) using three electrodes or four electrodes under a condition where the heat input was in a range of 2.0 kJ/mm to 10 kJ/mm depending on the plate thickness. As a result, a steel pipe was manufactured. A heat treatment of heating a weld of a part of the steel pipe at 400°C to the Ac1 point was performed.

An API 5L full thickness tensile test piece was collected from the obtained steel pipe and was made flat to measure the yield strength and the tensile strength.

In addition, in order to evaluate SSC resistance, a 4 point bending test piece was collected, and a 4 point bending test was performed under an actual yield stress of 90% in a solution environment having a hydrogen sulfide partial pressure shown in Table 4 and a pH of 3.5 according to NACE TM 0177 to investigate whether or not cracking occurred. When cracking did not occur, it was determined that the SSC resistance was satisfactory.

In addition, in order to evaluate HIC resistance, a full thickness test piece having a length of 100 mm and a width of 20 mm was collected and was dipped in a solution including 5% sodium chloride and 0.5% acetic acid for 96 hours under a condition where 0.1 MPa of hydrogen sulfide was saturated according to NACE TM 0284. Next, the crack area ratio was obtained. When the crack area ratio was 3% or less, it was determined that HIC resistance was satisfactory.

Using the same methods as those of Example 1, the maximum hardnesses of the surface layer and the thickness middle portion (1/2t portion) of the steel plate were measured, and the microstructure of the surface layer was observed with an optical microscope.

The results are shown in Table 4.

[Table 4-1]

| Base Metal | | | | | |
|---|---|---|---|---|---|
| Test No. | Primary Microstructure of Surface Layer of Steel Pipe | Total Area Fraction of Granular Bainite, Acicular Ferrite, Tempered Bainite, and Tempered Martensite % | Area Fraction of Residual Microstructure % | Maximum Hardness of Surface Layer Hv | Maximum Hardness of Thickness Middle Portion Hv |
| 1 | Acicular Ferrite+ Granular Bainite | 100 | 0 | 217 | 227 |
| 2 | Acicular Ferrite+ Granular Bainite | 95 | 5 | 225 | 235 |
| 3 | Acicular Ferrite+ Granular Bainite | 98 | 2 | 243 | 247 |
| 4 | Acicular Ferrite+ Granular Bainite | 97 | 3 | 234 | 244 |
| 5 | Acicular Ferrite+ Granular Bainite | 96 | 4 | 234 | 244 |
| 6 | Acicular Ferrite+ Granular Bainite | 97 | 3 | 234 | 244 |
| 7 | Acicular Ferrite+ Granular Bainite | 95 | 5 | 226 | 236 |
| 8 | Acicular Ferrite+ Granular Bainite | 97 | 3 | 226 | 236 |
| 9 | Acicular Ferrite+ Granular Bainite | 97 | 3 | 225 | 235 |
| 10 | Acicular Ferrite+ Granular Bainite | 97 | 3 | 213 | 223 |
| 11 | Acicular Ferrite+ Granular Bainite | 94 | 6 | 229 | 239 |
| 12 | Acicular Ferrite+ Granular Bainite | 92 | 8 | 217 | 227 |
| 13 | Acicular Ferrite+ Granular Bainite | 97 | 3 | 234 | 244 |
| 14 | Acicular Ferrite+ Granular Bainite | 96 | 4 | 214 | 224 |
| 15 | Acicular Ferrite+ Granular Bainite | 100 | 0 | 228 | 238 |
| 16 | Acicular Ferrite+ Granular Bainite | 94 | 6 | 229 | 239 |
| 17 | Acicular Ferrite+ Granular Bainite | 100 | 0 | 221 | 231 |
| 18 | Acicular Ferrite+ Granular Bainite | 94 | 6 | 227 | 237 |
| 19 | Acicular Ferrite+ Granular Bainite | 96 | 4 | 228 | 238 |
| 20 | Acicular Ferrite+ Granular Bainite | 97 | 3 | 231 | 241 |
| 21 | Acicular Ferrite+ Granular Bainite | 95 | 5 | 239 | 247 |

(continued)

| Test No. | Primary Microstructure of Surface Layer of Steel Pipe | Total Area Fraction of Granular Bainite, Acicular Ferrite, Tempered Bainite, and Tempered Martensite % | Area Fraction of Residual Microstructure % | Maximum Hardness of Surface Layer Hv | Maximum Hardness of Thickness Middle Portion Hv |
|---|---|---|---|---|---|
| | | Base Metal | | | |
| 22 | Acicular Ferrite+ Granular Bainite | 97 | 3 | 218 | 228 |
| 54 | Granular Bainite+ Acicular Ferrite | 95 | 5 | 223 | 231 |
| 55 | (Tempered Martensite or Tempered Bainite)+Granular Bainite | 96 | 4 | 230 | 238 |
| 56 | Acicular Ferrite+ Granular Bainite | 94 | 6 | 213 | 221 |

[Table 4-2]

| Test No. | Primary Microstructure of Surface Layer of Steel Pipe | Total Area Fraction of Granular Bainite, Acicular Ferrite, Tempered Bainite, and Tempered Martensite % | Area Fraction of Residual Microstructure % | Maximum Hardness of Surface Layer Hv | Maximum Hardness of Thickness Middle Portion Hv |
|---|---|---|---|---|---|
| | | Base Metal | | | |
| 23 | Acicular Ferrite+Granular Bainite+(Tempered Martensite or Tempered Bainite) | 79 | 21 | 267 | 295 |
| 24 | Ferrite | 5 | 95 | 182 | 190 |
| 25 | Granular Bainite+(Tempered Martensite or Tempered Bainite) | 70 | 30 | 407 | 415 |
| 26 | Acicular Ferrite+Granular Bainite | 93 | 7 | 275 | 282 |
| 27 | Acicular Ferrite+Granular Bainite | 93 | 7 | 223 | 231 |
| 28 | Acicular Ferrite+Granular Bainite | 92 | 8 | 219 | 227 |
| 29 | Acicular Ferrite+Granular Bainite | 92 | 8 | 265 | 273 |
| 30 | Acicular Ferrite+Granular Bainite | 93 | 7 | 260 | 268 |
| 31 | Acicular Ferrite+Granular Bainite | 94 | 6 | 276 | 283 |
| 32 | Acicular Ferrite+Granular Bainite | 92 | 8 | 223 | 231 |
| 33 | Acicular Ferrite+Granular Bainite | 90 | 10 | 207 | 215 |

(continued)

| | Base Metal | | | | |
|---|---|---|---|---|---|
| Test No. | Primary Microstructure of Surface Layer of Steel Pipe | Total Area Fraction of Granular Bainite, Acicular Ferrite, Tempered Bainite, and Tempered Martensite % | Area Fraction of Residual Microstructure % | Maximum Hardness of Surface Layer Hv | Maximum Hardness of Thickness Middle Portion Hv |
| 34 | Acicular Ferrite+Granular Bainite | 93 | 7 | 218 | 226 |
| 35 | Ferrite+Pearlite | 25 | 75 | 221 | 253 |
| 36 | Worked Ferrite+Acicular Ferrite+Granular Bainite | 77 | 23 | 255 | 263 |
| 37 | Acicular Ferrite+Granular Bainite+(Tempered Martensite or Tempered Bainite) | 78 | 22 | 260 | 263 |
| 38 | Ferrite+Acicular Ferrite+Granular Bainite | 79 | 21 | 211 | 219 |
| 39 | Acicular Ferrite+Granular Bainite+(Tempered Martensite or Tempered Bainite) | 79 | 21 | 260 | 268 |
| 40 | Acicular Ferrite+Granular Bainite+(Tempered Martensite or Tempered Bainite) | 75 | 25 | 272 | 300 |
| 41 | Acicular Ferrite+Granular Bainite+(Tempered Martensite or Tempered Bainite)+Residual Austenite | 79 | 21 | 256 | 284 |
| 42 | Granular Bainite-(Tempered Martensite or Tempered Bainite) | 78 | 22 | 371 | 399 |
| 43 | Granular Bainite-(Tempered Martensite or Tempered Bainite) | 78 | 22 | 362 | 390 |
| 44 | Ferrite | 5 | 95 | 159 | 187 |
| 45 | Granular Bainite+(Tempered Martensite or Tempered Bainite) | 78 | 22 | 383 | 411 |
| 46 | Acicular Ferrite+Granular Bainite | 95 | 5 | 231 | 251 |
| 47 | Acicular Ferrite+Granidat Bainite+(Tempered Martensite or Tempered Bainite) | 79 | 21 | 260 | 268 |
| 48 | Ferrite+Pearlite | 20 | 80 | 181 | 190 |
| 49 | Worked Ferrite+Acicular Ferrite+Granular Bainite | 77 | 23 | 230 | 248 |

(continued)

| | Base Metal | | | | |
|---|---|---|---|---|---|
| Test No. | Primary Microstructure of Surface Layer of Steel Pipe | Total Area Fraction of Granular Bainite, Acicular Ferrite, Tempered Bainite, and Tempered Martensite % | Area Fraction of Residual Microstructure % | Maximum Hardness of Surface Layer Hv | Maximum Hardness of Thickness Middle Portion Hv |
| 50 | Granular Bainite+(Tempered Martensite or Tempered Bainite) | 60 | 40 | 257 | 268 |
| 51 | Granular Bainite+(Tempered Martensite or Tempered Bainite) | 70 | 30 | 265 | 270 |
| 52 | Granular Bainite+(Tempered Martensite or Tempered Bainite) | 76 | 24 | 260 | 272 |
| 53 | Ferrite+Pearlite | 0 | 100 | 191 | 219 |

[Table 4-3]

| Test No. | Mechanical Properties | | | Sour Resistance | | | Pipe Diameter mm | Plate Thickness mm | Note |
|---|---|---|---|---|---|---|---|---|---|
| | Yield Strength Mpa | Tensile Strength Mpa | Yield Ratio % | Hydrogen Sulfide Partial Pressure MPa | 4 Point Bending Test Result | Dipping Test Result CAR % | | | |
| 1 | 513 | 598 | 86 | 0.2 | No Crack | 2 | 560 | 14 | Example |
| 2 | 541 | 624 | 87 | 0.3 | No Crack | 1 | 760 | 19 | Example |
| 3 | 589 | 681 | 86 | 0.4 | No Crack | 0 | 600 | 15 | Example |
| 4 | 590 | 654 | 90 | 0.5 | No Crack | 1 | 343 | 12 | Example |
| 5 | 568 | 653 | 87 | 1.2 | No Crack | 1 | 640 | 16 | Example |
| 6 | 589 | 654 | 90 | 0.5 | No Crack | 2 | 520 | 13 | Example |
| 7 | 567 | 628 | 90 | 1.7 | No Crack | 1 | 680 | 17 | Example |
| 8 | 564 | 627 | 90 | 2.0 | No Crack | 3 | 720 | 18 | Example |
| 9 | 555 | 625 | 89 | 1.0 | No Crack | 2 | 560 | 14 | Example |
| 10 | 523 | 587 | 89 | 0.5 | No Crack | 1 | 640 | 16 | Example |
| 11 | 559 | 637 | 88 | 0.6 | No Crack | 2 | 600 | 15 | Example |
| 12 | 550 | 598 | 92 | 0.2 | No Crack | 0 | 680 | 17 | Example |
| 13 | 578 | 653 | 89 | 0.3 | No Crack | 1 | 520 | 13 | Example |
| 14 | 522 | 588 | 89 | 0.4 | No Crack | 0 | 640 | 16 | Example |
| 15 | 551 | 633 | 87 | 0.5 | No Crack | 0 | 560 | 14 | Example |
| 16 | 554 | 637 | 87 | 0.7 | No Crack | 1 | 520 | 13 | Example |
| 17 | 533 | 612 | 87 | 0.9 | No Crack | 2 | 760 | 19 | Example |
| 18 | 555 | 631 | 88 | 1.2 | No Crack | 1 | 640 | 16 | Example |
| 19 | 560 | 633 | 88 | 1.0 | No Crack | 1 | 520 | 13 | Example |
| 20 | 555 | 644 | 86 | 0.5 | No Crack | 1 | 440 | 11 | Example |

(continued)

| Test No. | Mechanical Properties | | | Sour Resistance | | | Pipe Diameter mm | Plate Thickness mm | Note |
|---|---|---|---|---|---|---|---|---|---|
| | Yield Strength Mpa | Tensile Strength Mpa | Yield Ratio % | Hydrogen Sulfide Partial Pressure MPa | 4 Point Bending Test Result | Dipping Test Result CAR % | | | |
| 21 | 590 | 670 | 88 | 0.2 | No Crack | 1 | 600 | 15 | Example |
| 22 | 555 | 601 | 92 | 0.3 | No Crack | 2 | 560 | 14 | Example |
| 54 | 540 | 612 | 88 | 1.6 | No Crack | 0 | 600 | 15 | Example |
| 55 | 556 | 638 | 87 | 1.6 | No Crack | 0 | 800 | 20 | Example |
| 56 | 520 | 581 | 89 | 1.6 | No Crack | 0 | 1400 | 35 | Example |

[Table 4-4]

| Test No. | Mechanical Properties | | | Sour Resistance | | | Pipe Diameter mm | Plate Thickness mm | Note |
|---|---|---|---|---|---|---|---|---|---|
| | Yield Strength Mpa | Tensile Strength Mpa | Yield Ratio % | Hydrogen Sulfide Partial Pressure MPa | 4 Point Bending Test Result | Dipping Test Result CAR % | | | |
| 23 | 646 | 759 | 85 | 0.4 | Crack | 20 | 640 | 16 | Comparative Example |
| 24 | 400 | 481 | 83 | 0.5 | No Crack | 1 | 1200 | 30 | Comparative Example |
| 25 | 1222 | 1404 | 87 | 1.4 | Crack | 40 | 400 | 10 | Comparative Example |
| 26 | 546 | 625 | 87 | 1.2 | Crack | 23 | 560 | 14 | Comparative Example |
| 27 | 555 | 615 | 90 | 1.3 | No Crack | 30 | 760 | 19 | Comparative Example |
| 28 | 546 | 603 | 91 | 1.2 | No Crack | 20 | 520 | 13 | Comparative Example |
| 29 | 555 | 626 | 89 | 0.8 | Crack | 30 | 560 | 14 | Comparative Example |
| 30 | 555 | 643 | 86 | 0.2 | Crack | 35 | 520 | 13 | Comparative Example |
| 31 | 570 | 655 | 87 | 0.4 | Crack | 40 | 640 | 16 | Comparative Example |
| 32 | 535 | 615 | 87 | 0.5 | No Crack | 25 | 760 | 19 | Comparative Example |
| 33 | 500 | 563 | 89 | 0.2 | No Crack | 34 | 680 | 17 | Comparative Example |
| 34 | 521 | 598 | 87 | 0.3 | No Crack | 28 | 720 | 18 | Comparative Example |
| 35 | 420 | 515 | 82 | 0.4 | No Crack | 24 | 1200 | 30 | Comparative Example |
| 36 | 500 | 624 | 80 | 0.5 | Crack | 40 | 1280 | 32 | Comparative Example |

(continued)

| Test No. | Mechanical Properties | | | Sour Resistance | | | Pipe Diameter mm | Plate Thickness mm | Note |
|---|---|---|---|---|---|---|---|---|---|
| | Yield Strength Mpa | Tensile Strength Mpa | Yield Ratio % | Hydrogen Sulfide Partial Pressure MPa | 4 Point Bending Test Result | Dipping Test Result CAR % | | | |
| 37 | 598 | 688 | 87 | 0.2 | Crack | 35 | 640 | 16 | Comparative Example |
| 38 | 415 | 520 | 80 | 0.4 | No Crack | 1 | 520 | 13 | Comparative Example |
| 39 | 579 | 665 | 87 | 0.2 | Crack | 20 | 250 | 10 | Comparative Example |
| 40 | 660 | 774 | 85 | 1.6 | Crack | 25 | 640 | 16 | Comparative Example |
| 41 | 650 | 711 | 91 | 1.6 | Crack | 27 | 800 | 20 | Comparative Example |
| 42 | 990 | 1095 | 90 | 1.6 | Crack | 25 | 480 | 12 | Comparative Example |
| 43 | 880 | 1066 | 83 | 1.6 | Crack | 30 | 560 | 14 | Comparative Example |
| 44 | 350 | 406 | 86 | 1.6 | Crack | 34 | 640 | 16 | Comparative Example |
| 45 | 1000 | 1137 | 88 | 1.6 | Crack | 40 | 800 | 20 | Comparative Example |
| 46 | 556 | 639 | 87 | 1.6 | Crack | 37 | 600 | 15 | Comparative Example |
| 47 | 600 | 683 | 88 | 1.6 | Crack | 39 | 520 | 13 | Comparative Example |
| 48 | 470 | 510 | 92 | 1.6 | Crack | 2 | 800 | 20 | Comparative Example |
| 49 | 550 | 636 | 86 | 1.6 | Crack | 38 | 600 | 15 | Comparative Example |
| 50 | 660 | 724 | 91 | 1.6 | Crack | 30 | 720 | 18 | Comparative Example |
| 51 | 650 | 755 | 86 | 1.6 | Crack | 21 | 600 | 15 | Comparative Example |
| 52 | 690 | 745 | 93 | 1.6 | Crack | 25 | 680 | 17 | Comparative Example |
| 53 | 460 | 510 | 90 | 1.6 | Crack | 3 | 1200 | 30 | Comparative Example |

It can be seen that the steel pipes (Test Nos. 1 to 22 and 54 to 56) according to Examples had HIC resistance more satisfactory or equal to steel in the related art and satisfactory sour resistance (sulfide stress cracking resistance (SSC resistance)).

[Industrial Applicability]

As described above, according to the present invention, it is possible to provide a steel plate and a steel pipe having a yield strength of *350* MPa or higher and sufficient HIC resistance and in which cracking does not occur even when a stress that is 90% or higher of the yield strength is applied in an environment including hydrogen sulfide of higher than 0.1 MPa at 30°C or lower. Accordingly, the present invention has high industrial applicability.

[Brief Description of the Reference Symbols]

1: STEEL PIPE
2: STEEL PLATE (BASE METAL)
3: WELD

**Claims**

1. A steel plate,

   wherein the steel plate includes, as a chemical composition, by mass%,
   C: 0.030% to 0.080%,
   Mn: 0.80% to 1.60%,
   Nb: 0.006% to 0.100%,
   Ti: 0.001% to 0.030%,
   Ca: 0.0005% to 0.0050%,
   N: 0.0010% to 0.0080%,
   Cr: 0% to 1.00%,
   Mo: 0% to 0.50%,
   Ni: 0% to 1.00%,
   Cu: 0% to 1.00%,
   V: 0% to 0.10%,
   Mg: 0% to 0.0100%,
   REM: 0% to 0.0100%,
   O: limited to 0.0050% or less,
   Si: limited to 0.50% or less,
   Al: limited to 0.060% or less,
   P: limited to 0.020% or less,
   S: limited to 0.003% or less,
   a remainder of Fe and impurities,
   the steel plate satisfies ESSP defined by the following Expression (1): 1.5 to 3.0 and Ceq defined by the following Expression (2): 0.20 to 0.50,
   a total area fraction of one or more kinds selected from the group consisting of a granular bainite, an acicular ferrite, a tempered bainite, and a tempered martensite in a microstructure of a surface layer in a range up to a depth of 1.0 mm from a surface of the steel plate is more than 80%,
   $Hv_{max}$ that is a maximum hardness in the surface layer of the steel plate is 250 Hv or lower, and
   a yield ratio is 85% or higher,
   wherein the total area fraction, $Hv_{max}$ and the yield ratio are determined in accordance with the description,

$$ESSP=[Ca]\times(1-124\times[O])/(1.25\times[S]) \qquad \ldots \qquad (1),$$

   and

$$Ceq=[C]+[Mn]/6+([Cu]+[Ni])/15+([Cr]+[Mo]+[V])/5 \qquad \ldots \qquad (2),$$

   where [Ca], [O], [S], [C], [Mn], [Cu], [Ni], [Cr], [Mo], and [V] in Expressions (1) and (2) represent contents of Ca, O, S, C, Mn, Cu, Ni, Cr, Mo, and V in the steel plate, respectively, by mass%.

2. A steel pipe comprising:

   a base metal that includes a cylindrical steel plate; and

a weld that is provided in a seam portion of the steel plate and extends in a longitudinal direction of the steel plate, wherein the steel plate includes, as a chemical composition, by mass%,
C: 0.030% to 0.080%,
Mn: 0.80% to 1.60%,
Nb: 0.006% to 0.100%,
Ti: 0.001% to 0.030%,
Ca: 0.0005% to 0.0050%,
N: 0.0010% to 0.0080%,
Cr: 0% to 1.00%,
Mo: 0% to 0.50%,
Ni: 0% to 1.00%,
Cu: 0% to 1.00%,
V: 0% to 0.10%,
Mg: 0% to 0.0100%,
REM: 0% to 0.0100%,
O: limited to 0.0050% or less,
Si: limited to 0.50% or less,
Al: limited to 0.060% or less,
P: limited to 0.020% or less,
S: limited to 0.003% or less,
a remainder of Fe and impurities,
the steel plate satisfies ESSP defined by the following Expression (1): 1.5 to 3.0 and Ceq defined by the following Expression (2): 0.20 to 0.50,
a total area fraction of one or more kinds selected from the group consisting of a granular bainite, an acicular ferrite, a tempered bainite, and a tempered martensite in a microstructure of a surface layer in a range up to a depth of 1.0 mm from a surface of the base metal is more than 80%,
$Hv_{max}$ that is a maximum hardness in the surface layer of the base metal is 250 Hv or lower, and
a yield ratio is 85% or higher,
wherein the total area fraction, $Hv_{max}$ and the yield ratio are determined in accordance with the description,

$$ESSP=[Ca]\times(1-124\times[O])/(1.25\times[S]) \qquad ... \qquad (1),$$

and

$$Ceq=[C]+[Mn]/6+([Cu]+[Ni])/15+([Cr]+[Mo]+[V])/5 \qquad ... \qquad (2),$$

where [Ca], [O], [S], [C], [Mn], [Cu], [Ni], [Cr], [Mo], and [V] in Expressions (1) and (2) represent contents of Ca, O, S, C, Mn, Cu, Ni, Cr, Mo, and V in the steel plate, respectively, by mass%.

3. The steel plate according to claim 1 or the steel pipe according to claim 2,

   wherein the steel plate includes, as the chemical composition, by mass%, one or more kinds selected from the group consisting of
   Cr: 0.10% to 1.00%,
   Mo: 0.03% to 0.50%,
   Ni: 0.10% to 1.00%,
   Cu: 0.10% to 1.00%,
   V: 0.005% to 0.10%,
   Mg: 0.0010% to 0.0100%, and
   REM: 0.0010% to 0.0100%.

4. The steel plate according to claim 1 or 3, or the steel pipe according to claim 2 or 3,
   wherein the $Hv_{max}$ is 240 Hv or lower.

5. The steel pipe according to any one of claims 2 to 4,

   wherein a plate thickness of the base metal is 10 to 40 mm, and

a pipe diameter is 508 mm or more.

6. The steel pipe according to any one of claims 2 to 5, wherein the weld is a submerged arc weld.

**Patentansprüche**

1. Eine Stahlplatte,

wobei die Stahlplatte, als eine chemische Zusammensetzung, in Massen-%,
C: 0,030% bis 0,080%,
Mn: 0,80% bis 1,60%,
Nb: 0,006% bis 0,100%,
Ti: 0,001% bis 0,030%,
Ca: 0,0005 % bis 0,0050 %,
N: 0,0010% bis 0,0080%,
Cr: 0% bis 1,00%,
Mo: 0% bis 0,50%,
Ni: 0% bis 1,00%
Cu: 0% bis 1,00%,
V: 0% bis 0,10%,
Mg: 0 % bis 0,0100 %,
REM: 0% bis 0,0100%,
O: begrenzt auf 0,0050% oder weniger,
Si: begrenzt auf 0,50% oder weniger,
Al: begrenzt auf 0,060% oder weniger,
P: begrenzt auf 0,020% oder weniger,
S: begrenzt auf 0,003% oder weniger,
einen Rest aus Fe und Verunreinigungen beinhaltet,
die Stahlplatte ESSP, definiert durch den folgenden Ausdruck (1): 1,5 bis 3,0 und Ceq definiert durch den folgenden Ausdruck (2): 0,20 bis 0,50 erfüllt,
ein Gesamtflächenanteil einer oder mehrerer Arten, ausgewählt aus der Gruppe bestehend aus einem körnigen Bainit, einem nadelförmigen Ferrit, einem getemperten Bainit und einem getemperten Martensit in einer Mikrostruktur einer Oberflächenschicht in einem Bereich bis zu einer Tiefe von 1,0 mm von einer Oberfläche der Stahlplatte, mehr als 80 % beträgt,
$Hv_{max}$, das eine maximale Härte in der Oberflächenschicht der Stahlplatte bedeutet, 250 Hv oder weniger beträgt, und
ein Streckgrenzenverhältnis 85 % oder mehr beträgt,
wobei der Gesamtflächenanteil, $Hv_{max}$ und das Streckgrenzenverhältnis gemäß der Beschreibung bestimmt werden,

$$ESSP=[Ca]\times(1-124\times[O])/(1,25\times[S]) \quad \dots \quad (1),$$

und

$$Ceq=[C]+[Mn]/6+([Cu]+[Ni])/15+([Cr]+[Mo]+[V])/5 \quad \dots \quad (2),$$

wobei [Ca], [O], [S], [C], [Mn], [Cu], [Ni], [Cr], [Mo] und [V] in den Ausdrücken (1) und (2) Gehalte an Ca, O, S, C, Mn, Cu, Ni, Cr, Mo und V in der Stahlplatte in Massen-% darstellen.

2. Ein Stahlrohr, umfassend:

ein Basismetall, das eine zylindrische Stahlplatte beinhaltet; und
eine Schweißnaht, die in einem Nahtbereich der Stahlplatte bereitgestellt ist und sich in einer Längsrichtung der Stahlplatte erstreckt,
wobei die Stahlplatte, als eine chemische Zusammensetzung, in Massen-%,
C: 0,030% bis 0,080%,

Mn: 0,80% bis 1,60%,

Nb: 0,006% bis 0,100%,

Ti: 0,001% bis 0,030%,

Ca: 0,0005 % bis 0,0050 %,

N: 0,0010% bis 0,0080%,

Cr: 0% bis 1,00%,

Mo: 0% bis 0,50%,

Ni: 0% bis 1,00%

Cu: 0% bis 1,00%,

V: 0% bis 0,10%,

Mg: 0 % bis 0,0100 %,

REM: 0% bis 0,0100%,

O: begrenzt auf 0,0050% oder weniger,

Si: begrenzt auf 0,50% oder weniger,

Al: begrenzt auf 0,060% oder weniger,

P: begrenzt auf 0,020% oder weniger,

S: begrenzt auf 0,003% oder weniger,

einen Rest aus Fe und Verunreinigungen beinhaltet,

die Stahlplatte ESSP, definiert durch den folgenden Ausdruck (1): 1,5 bis 3,0 und Ceq definiert durch den folgenden Ausdruck (2): 0,20 bis 0,50 erfüllt,

ein Gesamtflächenanteil einer oder mehrerer Arten, ausgewählt aus der Gruppe bestehend aus einem körnigen Bainit, einem nadelförmigen Ferrit, einem getemperten Bainit und einem getemperten Martensit in einer Mikrostruktur einer Oberflächenschicht in einem Bereich bis zu einer Tiefe von 1,0 mm von einer Oberfläche des Basismetalls, mehr als 80 % beträgt,

$H_{Vmax}$, das eine maximale Härte in der Oberflächenschicht des Basismetalls bedeutet, 250 Hv oder weniger beträgt, und

ein Streckgrenzenverhältnis 85 % oder mehr beträgt,

wobei der Gesamtflächenanteil, $H_{Vmax}$ und das Streckgrenzenverhältnis gemäß der Beschreibung bestimmt werden,

$$ESSP=[Ca]\times(1-124\times[O])/(1,25\times[S]) \qquad ... \qquad (1),$$

und

$$Ceq=[C]+[Mn]/6+([Cu]+[Ni])/15+([Cr]+[Mo]+[V])/5 \qquad ... \qquad (2),$$

wobei [Ca], [O], [S], [C], [Mn], [Cu], [Ni], [Cr], [Mo] und [V] in den Ausdrücken (1) und (2) Gehalte an Ca, O, S, C, Mn, Cu, Ni, Cr, Mo und V in der Stahlplatte in Massen-% darstellen.

3. Die Stahlplatte gemäß Anspruch 1 oder das Stahlrohr gemäß Anspruch 2,

wobei die Stahlplatte, als chemische Zusammensetzung in Massen-%, eine oder mehrere Arten, ausgewählt aus der Gruppe bestehend aus

Cr: 0,10% bis 1,00%,

Mo: 0,03% bis 0,50%,

Ni: 0,10% bis 1,00%

Cu: 0,10% bis 1,00%,

V: 0,005% bis 0,10%,

Mg: 0,0010% bis 0,0100% und

REM: 0,0010% bis 0,0100% beinhaltet.

4. Die Stahlplatte gemäß Anspruch 1 oder 3 oder das Stahlrohr gemäß Anspruch 2 oder 3, wobei $Hv_{max}$ 240 Hv oder weniger beträgt.

5. Das Stahlrohr gemäß einem der Ansprüche 2 bis 4,

wobei eine Plattendicke des Basismetalls 10 bis 40 mm beträgt, und

ein Rohrdurchmesser 508 mm oder mehr beträgt.

6. Das Stahlrohr gemäß einem der Ansprüche 2 bis 5, wobei die Schweißnaht eine Unterpulverschweißnaht ist.

**Revendications**

1. Plaque d'acier,

   où la plaque d'acier comprend, en tant que composition chimique, en % en masse,
   C : 0,030 % à 0,080 %,
   Mn : 0,80 % à 1,60 %,
   Nb : 0,006 % à 0,100 %,
   Ti : 0,001 % à 0,030 %,
   Ca : 0,0005 % à 0,0050 %,
   N : 0,0010 % à 0,0080 %,
   Cr : 0 % à 1,00 %,
   Mo : 0 % à 0,50 %,
   Ni : 0 % à 1,00 %,
   Cu : 0 % à 1,00 %,
   V: 0 % à 0,10 %,
   Mg : 0 % à 0,0100 %,
   REM : 0 % à 0,0100 %,
   O : limité à 0,0050 % ou moins,
   Si : limité à 0,50 % ou moins,
   Al : limité à 0,060 % ou moins,
   P : limité à 0,020 % ou moins,
   S : limité à 0,003 % ou moins,
   un restant de Fe et d'impuretés,
   la plaque d'acier satisfait un indice ESSP défini par l'expression (1) suivante : 1,5 à 3,0 et Ceq défini par l'expression (2) suivante : 0,20 à 0,50,
   la fraction surfacique totale d'un ou de plusieurs types choisis dans le groupe constitué par une baïnite granulaire, une ferrite aciculaire, une baïnite revenue, et une martensite revenue dans une microstructure d'une couche de surface dans une plage allant jusqu'à une profondeur de 1,0 mm à partir d'une surface de la plaque d'acier est supérieure à 80 %,
   $H_{Vmax}$ qui est une dureté maximale dans la couche de surface de la plaque d'acier est de 250 Hv ou moins, et le rapport d'élasticité est de 85 % ou plus,
   où la fraction surfacique totale, $H_{Vmax}$ et le rapport d'élasticité sont déterminés conformément à la description,

   $$ESSP = [Ca] \times (1\text{-}124 \times [O]) / (1{,}25 \times [S]) \qquad \ldots \qquad (1),$$

   et

   $$Ceq = [C] + [Mn] / 6 + ([Cu] + [Ni]) / 15 + ([Cr] + [Mo] + [V]) / 5 \quad \ldots \quad (2),$$

   où [Ca], [O], [S], [C], [Mn], [Cu], [Ni], [Cr], [Mo] et [V] dans les expressions (1) et (2) représentent les teneurs en Ca, O, S, C, Mn, Cu, Ni, Cr, Mo et V dans la plaque d'acier, respectivement, en % en masse,

2. Tuyau en acier comprenant :

   un métal de base qui comprend une plaque d'acier cylindrique ; et
   une soudure qui est disposée dans une partie de jointure de la plaque d'acier et s'étend dans la direction longitudinale de la plaque d'acier,
   où la plaque d'acier comprend, en tant que composition chimique, en % en masse,
   C : 0,030 % à 0,080 %,
   Mn : 0,80 % à 1,60 %,
   Nb : 0,006 % à 0,100 %,

Ti : 0,001 % à 0,030 %,
Ca : 0,0005 % à 0,0050 %,
N : 0,0010 % à 0,0080 %,
Cr : 0 % à 1,00 %,
Mo : 0 % à 0,50 %,
Ni : 0 % à 1,00 %,
Cu : 0 % à 1,00 %,
V: 0 % à 0,10 %,
Mg : 0 % à 0,0100 %,
REM : 0 % à 0,0100 %,
O : limité à 0,0050 % ou moins,
Si : limité à 0,50 % ou moins,
Al : limité à 0,060 % ou moins,
P : limité à 0,020 % ou moins,
S : limité à 0,003 % ou moins,
un restant de Fe et d'impuretés,
la plaque d'acier satisfait un indice ESSP défini par l'expression (1) suivante : 1,5 à 3,0 et Ceq défini par l'expression (2) suivante : 0,20 à 0,50,
la fraction surfacique totale d'un ou de plusieurs types choisis dans le groupe constitué par une baïnite granulaire, une ferrite aciculaire, une baïnite revenue, et une martensite revenue dans une microstructure d'une couche de surface dans une plage allant jusqu'à une profondeur de 1,0 mm à partir d'une surface du métal de base est supérieure à 80 %,
$H_{Vmax}$ qui est une dureté maximale dans la couche de surface du métal de base est de 250 Hv ou moins, et le rapport d'élasticité est de 85 % ou plus,
où la fraction surfacique totale, $H_{Vmax}$ et le rapport d'élasticité sont déterminés conformément à la description,

$$ESSP = [Ca] \times (1\text{-}124 \times [O]) / (1,25 \times [S]) \qquad \ldots \qquad (1),$$

et

$$Ceq = [C] + [Mn] / 6 + ([Cu] + [Ni]) / 15 + ([Cr] + [Mo] + [V]) / 5 \quad \ldots \quad (2),$$

où [Ca], [O], [S], [C], [Mn], [Cu], [Ni], [Cr], [Mo] et [V] dans les expressions (1) et (2) représentent les teneurs en Ca, O, S, C, Mn, Cu, Ni, Cr, Mo et V dans la plaque d'acier, respectivement, en % en masse.

3. Plaque d'acier selon la revendication 1 ou tuyau en acier selon la revendication 2,

où la plaque d'acier comprend, en tant que composition chimique, en % en masse, un ou plusieurs types choisis dans le groupe constitué par
Cr : 0 % à 1,00 %,
Mo : 0,03 % à 0,50 %,
Ni : 0,10 % à 1,00 %,
Cu : 0,10 % à 1,00 %,
V : 0,005 % à 0,10 %,
Mg : 0,0010 % à 0,0100 %,
REM : 0,0010 % à 0,0100 %.

4. Plaque d'acier selon la revendication 1 ou 3, ou tuyau en acier selon la revendication 2 ou 3,
où $H_{Vmax}$ est de 240 Hv ou moins.

5. Tuyau en acier selon l'une quelconque des revendications 2 à 4,

où l'épaisseur de plaque du métal de base est de 10 à 40 mm, et
le diamètre de tuyau est de 508 mm ou plus.

6. Tuyau en acier selon l'une quelconque des revendications 2 à 5, où la soudure est une soudure à l'arc submergé,

# FIG. 1

# FIG. 2A

Max. 258Hv
Ave. 176Hv

## FIG. 2B

Max. 264Hv
Ave. 184Hv

## FIG. 2C

Max. 245Hv
Ave. 182Hv

40

# FIG. 3A

# FIG. 3B

## FIG. 4

## FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2832879 A1
- JP 2011017048 A
- JP 2012077331 A
- JP 2013139630 A
- JP 2014218707 A

**Non-patent literature cited in the description**

- *Nippon Steel Technical Report*, 2013 (397), 17-22
- *JFE Technical Report*, August 2005 (9), 19-24